# EUROPEAN PATENT SPECIFICATION

(11) **EP 3 530 519 B1**
(45) Date of publication and mention of the grant of the patent: **16.12.2020**
(21) Application number: 19153639.0
(22) Date of filing: 25.01.2019
(51) Int. Cl.: B60N 2/58, D06C 23/00

(54) **COVER WITH GEOMETRIC PATTERN**
ABDECKUNG MIT GEOMETRISCHEM MUSTER
COIFFE AVEC MOTIF GEOMETRIQUE

(30) Priority: 31.01.2018 JP 2018015385
(43) Date of publication of application: 28.08.2019
(73) Proprietor: TOYOTA BOSHOKU KABUSHIKI KAISHA, Kariya-shi, Aichi-ken 448-8651 (JP)
(72) Inventor: AKIBA, Satoshi, Kariya-shi, Aichi-ken, 448-8651 (JP)
(74) Representative: Winter, Brandl, Fürniss, Hübner, Röss, Kaiser, Polte - Partnerschaft mbB

(56) References cited:
- WO-A1-88/05420
- WO-A1-2015/132476
- JP-A- 2019 031 221

## Description

### TECHNICAL FIELD

The present invention relates to a cover capable of constituting an external appearance of a member, and in particular to a cover in which an outer surface thereof is provided with a design cover portion having a geometric planar shape.

### BACKGROUND

This type of cover is typically a surface member made of cloth or leather and configures an external appearance of a member such as a vehicle seat. The cover may have a geometric pattern by being subjected to a concave-convex process such as embossing or stitching from the viewpoint of imparting excellent design property to the member or the like. For example, in a vehicle seat disclosed in JP-A-2015-143067, stitches which are a linear seam is sewn into a rhombic shape on an outer surface of a fabric which forms a cover, and the outer surface of the fabric is divided into a plurality of rhombic sections. Further, the fabric is pulled and tightened by a sewing force of the stitches and the fabric in a divided section rises like a mountain, and thus it is possible to three-dimensionally express a plurality of rhombic patterns to the outer surface of the fabric.

However, the fabric (cover) on which the stitching is applied tends to have a poor stereoscopic effect because the concave-convex graphics are constant, and similar problems also occur even processed by the embossing. Therefore, from the viewpoint of further improving the design property of the cover, a process is desired to replace the conventional unevenness process, and particularly, it is desired to show an excellent stereoscopic effect by the geometrical patterns of the cover.
Document WO 2015/132476 A1 discloses a vehicle seat including a seat and a backrest that are covered with a seat cover comprising a first face oriented on the side of a seat cushion and a second face opposite to the first face and visible to an occupant of the vehicle. In order to improve the aesthetic appearance of the seat, on the second face, the seat cover comprises folds obtained by bringing a first portion of the first face and a second portion of the first face into contact with each other at an attachment point formed by a seam point. The folds are formed like a loop, filled with air and are facing away from the second face.

### SUMMARY

The present invention has been made in view of the above points, and an object thereof is to provide a cover to which a geometric pattern more excellent in design property is imparted.

According to a first aspect of the disclosure, there is provided a cover which is configured to constitute an external appearance of a member, wherein an outer surface of the cover is provided with a design cover portion and a general cover portion in a state where a positional relationship between the design cover portion and the general cover portion is maintained, the design cover portion having a geometric planar shape, and the general cover portion including a part provided to a back side of the design cover portion, characterized in that a back surface of the cover, which is opposite to the outer surface of the cover, is provided with a linear mountain fold portion and a linear valley fold portion which surround the design cover portion, and the general cover portion is configured by mountain-folding the cover along the mountain fold portion and valley-folding the cover along the valley fold portion in a case where the cover is viewed from the back surface side.

According to a second aspect of the disclosure, there is provided the cover according to the first aspect, wherein the part of the general cover portion is inserted to the back side of the design cover portion.

Accordingly, the outer surface of the cover is provided with the design cover portion and the general cover portion by performing a flat folding process (in particular, a plain-weave process such as torsion folding) in which the cover is folded to have multilayers and a flat shape. That is, by folding the general cover portion at the mountain fold portion and the valley fold portion provided on the back surface side of the cover, and by providing (inserting) at least a part of the general cover portion to the back side of the design cover portion, the geometric planar shape of the design cover portion can be shown with better design property.

According to a third aspect of the disclosure, there is provided the cover according to the first or second aspect, wherein the design cover portion is arranged on an outer surface side of the cover in a state of being raised up by the general cover portion.

Accordingly, since the design cover portion is raised up with respect to the general cover portion, it is possible to impart a more appropriate stereoscopic effect to the design cover portion.

According to a fourth aspect of the disclosure, there is provided the cover according to any one of the first to third aspects, wherein the outer surface of the cover is provided with a plurality of the design cover portions having a same polygonal planar shape, and wherein in a case where one virtual straight line which passes through a center of the same polygonal planar shape and extends within the same polygonal planar shape is defined and a direction of the virtual straight line is defined as a direction of the planar shape for each of the plurality of design cover portions, the plurality of design cover portions are arranged with the directions of the planar shapes thereof being the same.

Accordingly, since a plurality of design cover portions of the same shape are arranged with directions thereof being the same, the design property of the cover can be further improved.

According to a fifth aspect of the disclosure, there is provided the cover according to any one of the first to third aspects, wherein the outer surface of the cover is provided with a plurality of the design cover portions having a same polygonal planar shape, and wherein in a case where one virtual straight line which passes through a center of the same polygonal planar shape and extends within the same polygonal planar shape is defined and a direction of the virtual straight line is defined as a direction of the planar shape for each of the plurality of design cover portions, at least two of the design cover portions among the plurality of design cover portions are arranged with the directions of the planar shapes thereof being different from each other so as not to be in a parallel moving relationship with each other.

Accordingly, since at least two of the design cover portions are arranged with directions thereof being different from each other so as to show a different external appearance, the design property of the cover can be further improved.

According to a sixth aspect of the disclosure, there is provided the cover according to any one of the first to third aspects, wherein the outer surface of the cover is provided with at least two of the design cover portions, wherein two design cover portions having a same polygonal shape with each other is formed by mountain-folding the cover along the mountain fold portion and valley-folding the cover along the valley fold portion in a case where the cover is viewed from the back surface side, and wherein two design cover portions having a different polygonal shape with each other is formed by mountain-folding the cover along the valley fold portion and valley-folding the cover along the mountain fold portion in a case where the cover is viewed from the back surface side.

Accordingly, whether the planar shape of each design cover portion is the same or different can be selected, and variation of the geometric pattern provided on the cover can be increased.

According to a seventh aspect of the disclosure, there is provided the cover according to any one of the first to sixth aspects, wherein the mountain fold portion and the valley fold portion are each configured by a linear groove provided on the back surface of the cover, and in a case where a dimension of the groove in a direction perpendicular to an extending direction thereof is defined as a width dimension of the groove, a width dimension of the groove configuring the valley fold portion is different from a width dimension of the groove configuring the mountain fold portion.

Accordingly, since the width dimensions of the mountain fold portion and the valley fold portion are different from each other and thus are distinguished more clearly, each cover part can be provided more appropriately.

According to the first aspect of the present invention, it is possible to provide a cover to which a geometric pattern more excellent in design property is imparted. According to the second aspect, it is possible to provide a cover to which a geometric pattern more excellent in design property is imparted. According to the third aspect, it is possible to provide a cover to which a geometric pattern even more excellent in design property is imparted. According to the fourth aspect, it is possible to provide a cover to which a geometric pattern more excellent in design property is imparted. According to the fifth aspect, it is possible to provide a cover to which a geometric pattern more excellent in design property is imparted. According to the sixth aspect, it is possible to provide a cover to which a geometric pattern even more excellent in design property is imparted. Further, according to the seventh aspect, it is possible to provide a cover to which a geometric pattern is imparted more appropriately.

### BRIEF DESCRIPTION OF DRAWINGS

FIG. 1 is a front view of a vehicle seat;
FIG. 2 is an outer view of a part of a seat cover;
FIG. 3 is a back view of a seat cover in a deployed state;
FIG. 4 is a cross-sectional view of a seat cover corresponding to a cross section taken along a line IV-IV of FIG. 3;
FIG. 5 is a cross-sectional view of a seat cover corresponding to a cross section taken along a line V-V of FIG. 2;
FIG. 6 is a back view of the seat cover shown in FIG. 2;
FIG. 7 is an outer view of a seat cover of Alternative Example 1;
FIG. 8 is a back view of the seat cover of Alternative Example 1 in a deployed state;
FIG. 9 is an outer view of a seat cover of Alternative Example 2;
FIG. 10 is a back view of the seat cover of Alternative Example 2 in a deployed state;
FIG. 11 is a back view of the seat cover of Alternative Example 2;
FIG. 12 is an outer view of a seat cover of Alternative Example 3;
FIG. 13 is a back view of the seat cover of Alternative Example 3 in a deployed state;
FIG. 14 is a perspective view of a vehicle seat of Embodiment 2;
FIG. 15 is an outer view of a part of a seat cover of Embodiment 2;
FIG. 16 is a back view of the seat cover of Embodiment 2 in a deployed state;
FIG. 17 is a back view of the seat cover of Embodiment 2;
FIG. 18 is an outer view of a seat cover of Alternative Example 4;
FIG. 19 is a back view of the seat cover of Alternative Example 4 in a deployed state;
FIG. 20 is an outer view of a seat cover of Alternative Example 5;
FIG. 21 is a back view of the seat cover of Alternative Example 5 in a deployed state;
FIG. 22 is an outer view of a seat cover of Modified Example 1;
FIG. 23 is a back view of the seat cover of Modified Example 1 in a deployed state;
FIG. 24 is an outer view of a seat cover of Alternative Example 6;
FIG. 25 is a back view of the seat cover of Alternative Example 6 in a deployed state;
FIG. 26 is an outer view of a seat cover of Modified Example 2; and
FIG. 27 is an outer view of a seat cover of Modified Example 3.

### DETAILED DESCRIPTION

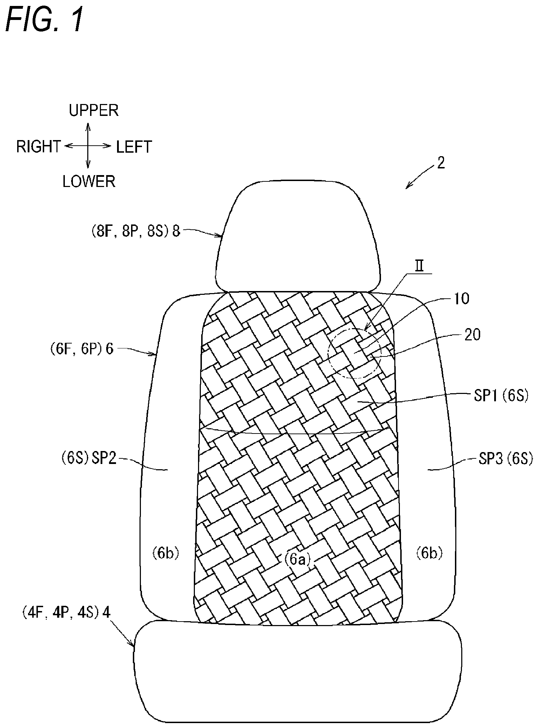

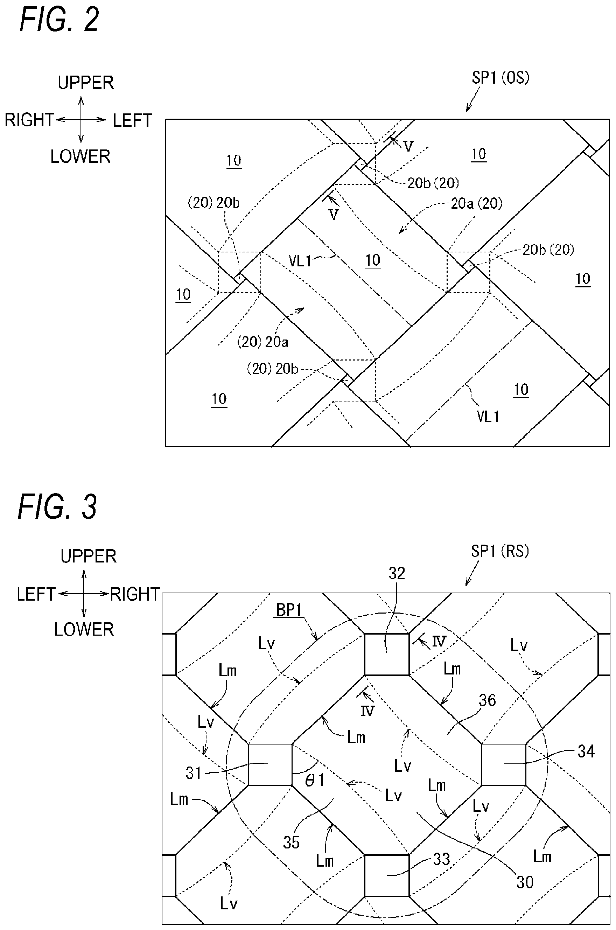

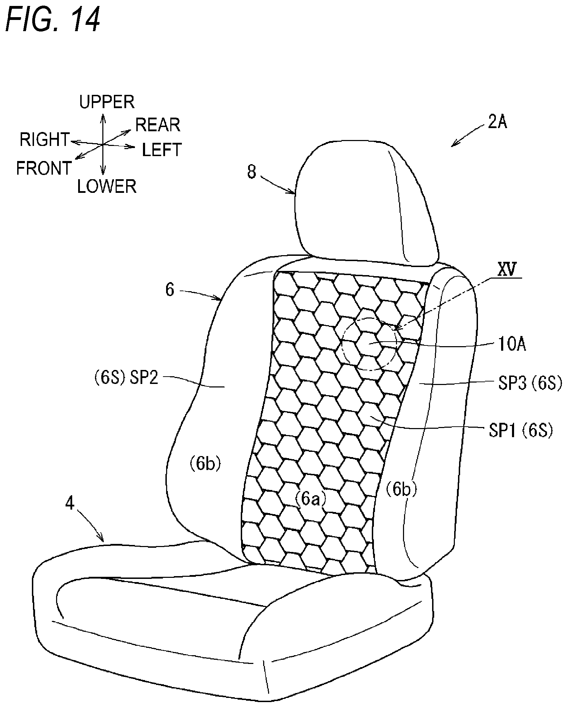

Hereinafter, embodiments for implementing the present invention will be described with reference to FIGS. 1 to 27. In FIG. 1 and FIG. 14, arrows indicating a front-rear direction, an upper-lower direction, and a left-right direction of a vehicle seat are appropriately illustrated for convenience. In FIGS. 2 to 13 and FIGS. 15 to 27, arrows indicating the front-rear direction, the left-right direction, and the upper-lower direction are appropriately illustrated with reference to a case where the seat cover as the cover is arranged on the vehicle seat. Further, in FIGS. 3 to 5, FIG. 8, FIG. 16 and FIG. 21, a mountain fold portion is denoted by a reference numeral Lm and a valley fold portion is denoted by a reference numeral Lv. For convenience, in other figures in which the seat cover is deployed, the mountain fold portions are indicated by solid lines with the reference numerals thereof being omitted, and the valley fold portions are indicated by broken lines with the reference numerals thereof being omitted.

A vehicle seat 2 in FIG. 1 includes a seat cushion 4, a seat back 6 and a headrest 8. Each of these seat configuring members (4, 6, 8) includes a seat frame (4F, 6F, 8F) forming a seat framework, a seat pad (4P, 6P, 8P) forming an outer shape of a seat, and a seat cover (4S, 6S, 8S) covering the seat pad. Further, a lower portion of the seat back 6 is coupled to a rear portion of the seat cushion 4 (to be described in detail below) in a manner capable of raising and falling, and the headrest 8 is provided on an upper portion of the seat back 6.

### [Seat Back]

The seat back 6 in FIG. 1 is a member which is substantially rectangular in a top view and serves as a backrest for an occupant, and includes the above basic configurations 6F, 6P, and 6S (details of each member will be described as appropriate below). In the seat back 6, the seat pad 6P on the seat frame 6F is covered by the seat cover 6S, and an external appearance of the seat is formed by the seat cover 6S. Further, a plurality of geometric patterns (a design cover portion 10 to be described below) are provided on the seat cover 6S, and these geometric patterns can be formed by performing a predetermined process to be described below on the seat cover 6S (in FIG. 1, only one design cover portion is denoted by a reference numeral for convenience). Further, when forming this type of geometric pattern, a process is desired to replace a stitching process, an embossing process or the like, and particularly, it is desired to give an excellent stereoscopic effect in the geometrical patterns of the seat cover 6S. Therefore, the present embodiment provides a seat cover 6S to which a geometric pattern more excellent in design property is imparted by a configuration to be described below (a plurality of design cover portions 10, a plurality of general cover portions 20). Hereinafter, each configuration will be described in detail.

### [Basic Configuration]

Here, in general, the seat frame 6F (not shown) is substantially a rectangular or arched frame body in a front view, and can be formed of a material having excellent rigidity such as a metal or a hard resin. The seat pad 6P (not shown) is a member forming an outer shape of the seat back 6 and can be formed of, for example, a foamed resin such as polyurethane foam (density: 10 kg/m³ to 60 kg/m³). With reference to FIG. 1, a seating portion 6a and left and right bank portions 6b are formed on a seating surface of the seat pad 6P. The seating portion 6a is a part which is formed at a center in a seat width direction and on which an occupant can be seated. The left or right bank portions 6b are parts rising forward in a mountain-like manner on lateral sides of the seating portion 6a.

### [Seat Cover (Cover)]

Further, the seat cover 6S is a surface member forming the cover of the present invention, and is formed by sewing a plurality of cover pieces SP1 to SP3 or the like (in FIG. 1, only a specific cover piece is shown for convenience). For example, the seating surface of the seat cover 6S is formed by sewing the main cover piece SP1 to be covered on the seating portion 6a and a pair of side cover pieces SP2, SP3 to be covered on the left and right bank portions 6b. As a material of each of the cover pieces SP1 to SP3, various surface materials capable of forming the design surface of the seat can be used, for example, leather (natural leather, synthetic leather) or a fabric (a woven fabric, a knitted fabric, or an nonwoven fabric) can be appropriately selected and used.

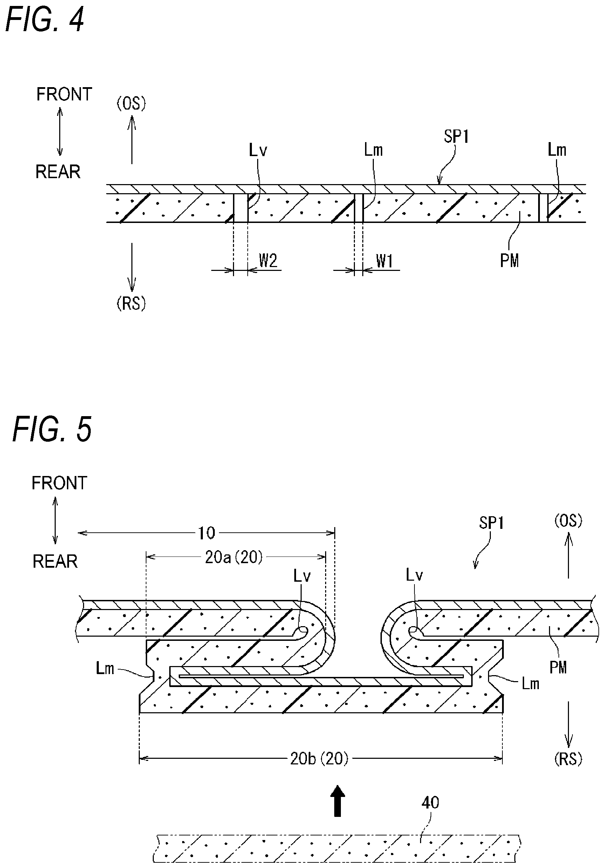

Here, it is preferable to use a surface material having appropriate rigidity for a part of the seat cover 6S to which a geometric pattern to be described below is to be applied, and examples of this type of surface material can include cloth or leather (not shown) with a pad member PM shown in FIG. 4. In the present embodiment, as the material of the main cover piece SP1, a cloth with a pad member PM which is relatively rigid and has appropriate shape retainability is used. The cloth with a pad member PM is a surface member in which the pad member PM is integrated on a back surface of the cloth, this type of pad member PM can be formed of a mat material made of an elastically stretchable foam resin, such as urethane lamination. A material of other cover pieces may be the same as or different from the material of the main cover piece SP1.

### [Main Cover Piece (Summary of Flat Folding process)]

For example, with reference to FIG. 1, the main cover piece SP1 includes a plurality of design cover portions 10 which have a geometric planar shape and general cover portions 20 (details of each cover portion will be described below, and in FIG. 1, only a part of each cover portion is denoted by a reference numeral). The design cover portion 10 and the general cover portion 20 are formed by performing a flat folding process to fold the main cover piece SP1 to have multilayers and a flat shape, and in the embodiments or the like shown below, a plain-weave process such as a torsion folding process is mainly used. Further, for example, on a back surface RS of the main cover piece SP1 in a deployed state shown in FIG. 3, mountain fold portions Lm and valley fold portions Lv which are folding lines during the flat folding are provided (details of each fold portion will be described below and in FIG. 3, the mountain fold portion Lm is shown by a solid line and the valley fold portion Lv is shown by a broken line). These mountain fold portions Lm and these valley fold portions Lv are linear grooves, and on the back surface RS of the main cover piece SP1, a polygon formed by the mountain fold portions Lm and the valley fold portions Lv portions is paved with a certain rule and is filled in a plane. Further, the main cover piece SP1 is folded at the mountain fold portions Lm and the valley fold portions Lv, and thus the design cover portions 10 and the general cover portions 20 to be described below can be formed. Here, various polygons can be filled in a plane on the back surface RS of the main cover piece SP1 with regularity which allows the flat folding. Numerous types of filling patterns (tiling patterns) exist, and a Voronoi diagram can be used if necessary. The specific tiling pattern and the configurations of the design cover portion 10 and the general cover portion 20 formed based thereon are illustrated in each of the embodiments or the like shown below.

### [Embodiment 1 (Design Cover Portion)]

With reference to FIG. 1 and FIG. 2, the main cover piece SP1 of Embodiment 1 is provided with a plurality of design cover portions 10 and general cover portions 20 (to be described in detail below). In the present embodiment (and Alternative Examples 1 to 3 to be described below), each design cover portion 10 has a planar shape based on a quadrangle, and in the present embodiment, a same rectangular shape (an example of a geometric pattern), when viewed from the front, is used as a planar shape of each design cover portion 10. Further, adjacent design cover portions 10 are arranged with directions of the planar shapes thereof being different so as not to be in a parallel moving relationship with each other. That is, in the present embodiment, one virtual straight line VL1 which is parallel to a long side of the same rectangular planar shape and passes through a center thereof is defined, and a direction of the virtual straight line VL1 is defined as a direction of the planar shape. Further, the virtual straight line VL1 of a specific design cover portion 10 arranged substantially in a center in FIG. 2 is gradually inclined downward toward a left side. Further, virtual straight lines VL1 of other design cover portions 10 which are vertically and laterally adjacent to the specific design cover portion 10 are gradually inclined upward toward the left side, and are arranged perpendicularly to the virtual straight line VL1 of the specific design cover portion 10 (in FIG. 2, the virtual straight line VL1 is shown on one of other design cover portions 10, for convenience). In this way, the virtual straight lines VL1 are arranged perpendicularly with each other and a pair of adjacent design cover portions 10 are arranged to cross each other, so that an outer surface OS of the main cover piece SP1 has an appearance like a plain-weave (one of three foundation weaves) woven fabric and is excellent in design property. In a case where the planar shape is a rectangular shape and has the above positional relationship, the specific design cover portion 10 and another adjacent design cover portion 10 do not exactly match even if the specific design cover portion 10 is moved in parallel toward another adjacent design cover portion 10. Therefore, the design cover portions 10 are not in a parallel moving relationship.

### [General Cover Portion]

With reference to FIG. 2, the general cover portions 20 are a part of the main cover piece SP1 excluding the design cover portions 10, and each includes an insertion portion 20a and a filling portion 20b. Each of the portions 20a, 20b forming the general cover portion 20 is formed by flat-folding the main cover piece SP1 based on the mountain fold portions Lm and the valley fold portions Lv (to be described in detail below) shown in FIG. 3 and FIG. 4. Further, with reference to FIGS. 2 and 5, the insertion portion 20a is a trapezoidal cover part provided in a periphery of the design cover portion 10, and is internally folded and inserted toward a back side of the long side of the adjacent design cover portion 10. The filling portion 20b is a rhombic part which is folded back in an opposite direction from a peripheral edge of the insertion portion 20a and is arranged to fill a space between each design cover portion 10. Further, in the general cover portion 20 of the present embodiment, the insertion portion 20a is arranged on the filling portion 20b and further, the insertion portion 20a is inserted to the back side of a corresponding design cover portion 10. Therefore, each of the design cover portions 10 is in a state of being raised up from the filling portion 20b by the insertion portion 20a of the general cover portion 20, and is arranged at a position on a side of the outer surface OS which is one step higher than the filling portion 20b (one step higher toward the front side in FIG. 5).

### [Mountain Fold Portion, Valley Fold Portion]

The insertion portion 20a and the filling portion 20b of the general cover portion 20 in FIG. 2 can be formed by mountain folding or valley folding the main cover piece SP1 at specific locations by the torsion folding process (to be described in detail below). Accordingly, the mountain fold portions Lm and the valley fold portions Lv which are folding lines during the torsion folding are provided on the back surface RS of the main cover piece SP1 in a deployed state shown in FIG. 3. Here, as shown in FIG. 4, the mountain fold portions Lm and the valley fold portions Lv are separately grooves provided in the back surface RS of the main cover piece SP1, and extend linearly (line-segmentally) or curvedly in an appropriate direction. That is, the mountain fold portions Lm and the valley fold portions Lv are grooves provided on a pad member PM side in a case where the main cover piece SP1 is a cloth with a pad member PM, and are grooves provided on a floor leather (or an alternative layer) side in a case where the main cover piece SP1 is leather. Here, in a case where a dimension in a direction perpendicular to an extending direction of the groove of each folding portions Lm, Lv is defined as a width dimension, a width dimension W1 of the mountain fold portion Lm and a width dimension W2 of the valley fold portion Lv may be the same or different. In the present embodiment, the width dimension W1 of the mountain fold portion Lm is smaller than the width dimension W2 of the valley fold portion Lv. Thus, the mountain fold portion Lm and the valley fold portion Lv are easily distinguished, and the general cover portion 20 can be mountain-folded and valley-folded at more accurate locations. Although method for forming the mountain fold portion Lm and the valley fold portion Lv is not particularly various concave-convex processes including embossing is an example thereof. The fold portions can also be formed by partially removing the floor leather or the pad member PM or not arranging the floor leather or the pad member PM.

### [First Tiling Pattern]

With reference to FIG. 3, a plurality of types of polygonal sections formed by the mountain fold portions Lm and the valley fold portions Lv are arranged on the back surface RS of the main cover piece SP1 in a first tiling pattern. In the present embodiment, a first basic pattern BP1 (see a part surrounded by a one-dotted broken line in FIG. 3) including a plurality of sections 30 to 36 is provided, and further the first basic pattern BP1 is filled and arranged on the back surface RS of the main cover piece SP1 according to a predetermined rule to be described below. Further, since each of the first basic patterns BP1 has the same configuration, details of one first basic pattern BP1 will be described below as an example. The first basic pattern BP1 is composed of three types of quadrangular sections, and includes a rectangular central section 30, four square corner sections 31 to 34 and a pair of trapezoidal lateral sections 35, 36. Sides of each of the sections 31 to 36 are formed by one of the mountain fold portion Lm and the valley fold portion Lv.

Here, with reference to FIG. 2 and FIG. 3, the central section 30 is a rectangular section which forms the design cover portion 10, a pair of long sides thereof is formed by the valley fold portions Lv, and a pair of short sides thereof is formed by mountain fold portions Lm (a relationship with each corner section will be described below). The central section 30 is in a state of being gradually inclined downward toward the right side. Each of the pair of lateral sections 35, 36 is a trapezoidal section which forms the insertion portion 20a of the general cover portion 20, and is provided adjacent to the outside of the long side of the central section 30. Each of the lateral sections 35, 36 has a trapezoidal shape with the valley fold portion Lv forming the long side of the central section 30 as a lower base. Further, the mountain fold portions Lm formed at the corner sections 31, 33 (32, 34) are configured as inclined sides and an upper base of each lateral section 35 (36) (a relationship with each corner section will be described below).

Further, with reference to FIG. 2 and FIG. 3, each of the four corner sections (first corner section 31, second corner section 32, third corner section 33, and fourth corner section 34) is a square section forming the filling portion 20b of the general cover portion 20. Each of these corner sections 31 to 34 is arranged adjacently on a corresponding corner of the central section 30, and can be rotated in a predetermined direction during the torsion folding to be described below. The first corner section 31 is arranged at a left corner of the design cover portion 10 and the second corner section 32 is arranged at an upper corner of the design cover portion 10. The third corner section 33 is arranged at a lower corner of the design cover portion 10 and the fourth corner section 34 is arranged at a right corner of the design cover portion 10. Further, the first corner section 31 and the second corner section 32 are arranged in pairs at an upper short side of the central section 30, and the third corner section 33 and the fourth corner section 34 are arranged in pairs at a lower short side of the central section 30. The first corner section 31 and the third corner section 33 are arranged in pairs at a lower long side of the central section 30, and the second corner section 32 and the fourth corner section 34 are arranged in pairs at an upper long side of the central section 30. Each of the corner sections 31 to 34 has substantially the same basic configuration, and the paired sections are in a mirror image relationship. Therefore, details of the first corner section 31 will be described below as an example.

The first corner section 31 shown in FIG. 3 is a rhombic section formed by the mountain fold portions Lm, and the mountain fold portions Lm and the valley fold portions Lv extend radially from four vertexes thereof. That is, linear mountain fold portions Lm extend respectively from each vertex of the first corner section 31, and these mountain fold portions Lm are arranged in a cross shape around a center of the first corner section 31. Further, a curved valley fold portion Lv extends from each vertex of the first corner section 31, and the valley fold portion Lv is arranged to be inclined by about 90° clockwise with respect to the mountain fold portion Lm extending from the same vertex. The second corner section 32 and the third corner section 33 are arranged in pairs at predetermined positions of the central section 30 respectively with respect to the first corner section 31. The second corner section 32 and the third corner section 33 are in the mirror image relationship with the first corner section 31, and are formed by reversing (performing mirror image inversion on) the mountain fold portion Lm and valley fold portion Lv which are arranged radially. Further, the fourth corner section 34 is arranged facing the first corner section 31, and for the fourth corner section 34, the radial mountain fold portion Lm and valley fold portion Lv are formed with the same positional relationship as that of the first corner section 31.

The central section 30 shown in FIG. 3 is formed by the mountain fold portions Lm and the valley fold portions Lv which extend radially from each of the corner sections 31 to 34. That is, the mountain fold portion Lm connecting facing vertexes of the first corner section 31 and the second corner section 32 forms an upper short side of the central section 30. The mountain fold portion Lm connecting facing vertexes of the third corner section 33 and the fourth corner section 34 forms a lower short side of the central section 30. The valley fold portion Lv connecting vertexes on the inner side of the first corner section 31 and the third corner section 33 forms a lower long side of the central section 30. The valley fold portion Lv connecting vertexes on the inner side of the second corner section 32 and the fourth corner section 34 forms an upper long side of the central section 30. The lower lateral section 35 is formed between the corner sections 31, 33 paired at the lower long side of the central section 30. The mountain fold portion Lm connecting facing vertexes of the first corner section 31 and the third corner section 33 forms an upper base of the lower lateral section 35, and facing sides of the two corner sections 31, 33 form inclined sides of the lower lateral section 35. Similarly, the upper lateral section 36 is formed between the corner sections 32, 34 paired at the upper long side of the central section 30. Further, the mountain fold portion Lm connecting facing vertexes of the second corner section 32 and the fourth corner section 34 forms an upper base of the upper lateral section 36, and facing sides of the two corner sections 32, 34 form inclined sides of the upper lateral section 36.

Further, a plurality of the above first basic patterns BP1 are combined and filled on the back surface RS of the main cover piece SP1 of FIG. 3. That is, four other first basic patterns BP1 are arranged around one first basic pattern BP1 (see a part surrounded by the one-dotted broken line in FIG. 3) in an X shape. Further, adjacent first basic patterns BP1 are connected by sharing a pair of corner sections arranged therebetween. With respect to the central section 30 of one first basic pattern BP1, the central sections 30 of other first basic patterns BP1 are arranged in a state of being rotated by 90° (in a crossing state). That is, on the back surface RS of the main cover piece SP1, the central sections 30 of the first basic patterns BP1 are provided in a crossing state, and thus each design cover portion 10 having the positional relationship shown in FIG. 2 can be formed.

### [Folding of Main Cover Piece (Forming of Design Cover Portion and General Cover Portion)]

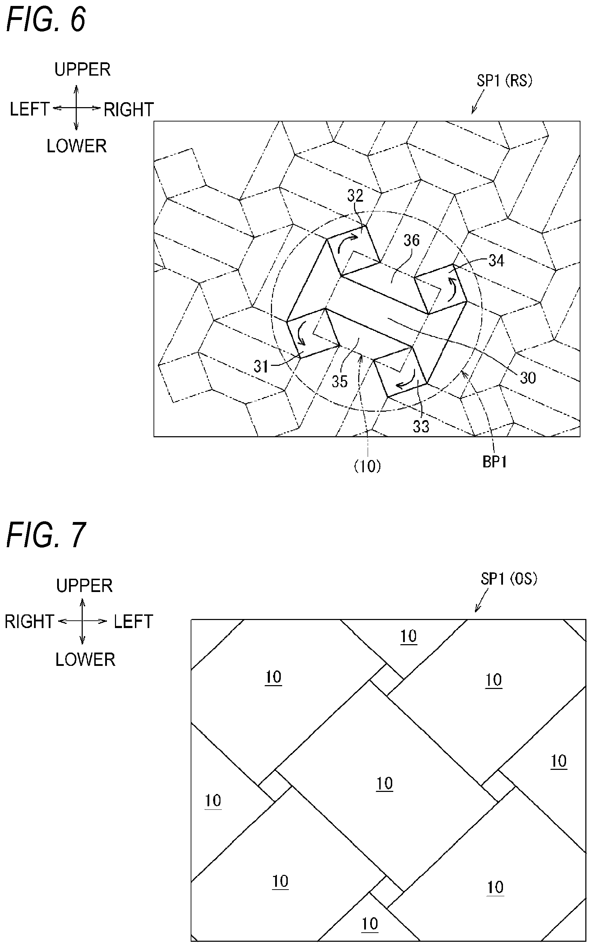

With reference to FIG. 3 and FIG. 6, the back surface RS of the main cover piece SP1 is mountain-folded along the mountain fold portions Lm and is valley-folded along the valley fold portions Lv. At this time, each main cover piece SP1 can be torsionally folded with reference to each of the corner sections 31 to 34 in the first basic pattern BP1. For example, in the present embodiment, as shown in FIG. 6, the first corner section 31 and the fourth corner section 34 are rotated in the counterclockwise direction by twice of θ1 and surrounding parts thereof in the main cover piece SP1 are folded in the order of valley fold and mountain fold so as to be folded over. At the same time, the second corner section 32 and the third corner section 33 are rotated by the same amount in the clockwise direction, and surrounding parts thereof in the main cover piece SP1 are folded in the order of the mountain fold portion Lm and the valley fold portion Lv so as to be folded over. Thus, in the torsion folding, the surrounding parts in the main cover piece SP1 can be folded over with each of the corner sections 31 to 34 as rotation centers and can be contracted in a plane direction.

Thus, since the main cover piece SP1 is contracted in the plane direction while being partially rotated, each central section 30 is folded out to the outer surface OS of the main cover piece SP1 shown in FIG. 2, and a corresponding design cover portion 10 is formed by each central section 30. The insertion portions 20a formed by folding the lateral sections 35, 36 toward each other are inserted toward the long side of the design cover portion 10, and the filling portions 20b are further formed by each corner sections 31 to 34. Further, the filling portion 20b is arranged between adjacent design cover portions 10 to fill the gaps. Thus, a plurality of design cover portions 10 and general cover portions 20 can be formed to the outer surface OS of the main cover piece SP1 after folding. Further, as shown in FIG. 5, by being raised up by the insertion portion 20a, each design cover portion 10 floats toward the outer surface OS side and upward than the filling portion 20b.

### [Maintaining Portion]

In the present embodiment, the positional relationship between the design cover portion 10 and the general cover portion 20 can be maintained by a maintaining portion 40. This type of maintaining portion 40 can be formed by an adhesive layer formed of an adhesive, an adhesive material (hot melt material, tape material) or the like, or a physical member such as staple or suture. In the present embodiment, the maintaining portion 40 made of a planar adhesive material is superposed on the back surface RS of the main cover piece SP1 after folding. Further, after being heated, the maintaining portion 40 is solidified and fixed to the back surface RS of the main cover piece SP1, and thus the arrangement positions of the design cover portion 10 and the general cover portion 20 can be maintained. Other than the back surface RS of the main cover piece SP1, the maintaining portion 40 can also be arranged between the insertion portion 20a and the filling portion 20b which form the general cover portion 20.

### [Forming of Seat Back]

In the forming of the seat back 6 of FIG. 1, the seat pad 6P on the seat frame 6F is covered by the seat cover 6S, and a design surface of the seat is formed by the seat cover 6S. A plurality of design cover portions 10 are provided on the seat cover 6S from the viewpoint of improving the design property of the seat, and the plurality of design cover portions 10 show geometric patterns. In this type of configuration, it is desired to improve the design property of the geometric patterns of the seat cover 6S, and in particular, it is desired to give an excellent stereoscopic effect in the geometric patterns.

Therefore, with reference to FIG. 2, the outer surface OS of the main cover piece SP1 of the present embodiment is provided with the design cover portion 10 having a geometric planar shape and the general cover portion 20 including the insertion portion 20a provided to the back side of the design cover portion 10 in a state where the positional relationship between the design cover portion 10 and the general cover portion 20 is maintained. With reference to FIG. 3, the back surface RS of the main cover piece SP1 is provided with the linear mountain fold portions Lm and the linear valley fold portions Lv to surround the design cover portion 10. Further, the general cover portion 20 is configured by mountain-folding the main cover piece SP1 along the mountain fold portions Lm and valley-folding the main cover piece SP1 along the valley fold portions Lv in a case where the main cover piece SP1 is viewed from the back surface RS side.

That is, in the present embodiment, with reference to FIG. 2 and FIG. 5, the mountain fold portions Lm and the valley fold portions Lv are provided on the back surface RS side of the main cover piece SP1, and the main cover piece SP1 is subjected to a flat folding process based on these fold portions Lm, Lv. Further, since the insertion portion 20a of the general cover portion 20 is provided to the back side of the design cover portion 10, each design cover portion 10 is raised up by the insertion portion 20a and is brought to a state of floating toward the outer surface OS side of the design cover portion SP1. Accordingly, since the design cover portion 10 is raised up and brought into a floating state, it is possible to impart an excellent stereoscopic effect to the design cover portion 10. In the present embodiment, a same planar shape (rectangle of the same shape and same size) is adopted for each design cover portion 10 and further, the adjacent design cover portions 10 are arranged to cross each other. Therefore, the outer surface OS of the main cover piece SP1 shows an appearance like a plain-weave woven fabric and is excellent in design property.

When an occupant is seated, the occupant is mainly supported by the main cover piece SP1 of the seat cover 6S. At this time, the main cover piece SP1 receives the occupant by each of the design cover portions 10, and each design cover portion 10 has a planar shape with a uniform thickness. Therefore, the occupant can be planarly supported by each of the design cover portions 10, and the riding comfort of the seat can be further improved. The occupant can be supported by the design cover portions 10 and the general cover portions 20 (insertion portions 20a) on the back side of the design cover portions 10, which also contributes to improvement of the support performance. Further, since the design cover portion 10 and the insertion portion 20a are capable of elastically expanding and contracting, the expanding and contracting can match and follow a movement of the occupant (for example, forward and rearward movement).

As described above, in the present embodiment, the outer surface OS of the main cover piece SP1 is provided with the design cover portions 10 and the general cover portions 20 by applying the torsion folding process to the main cover piece SP1 (a part of the cover). That is, by forming the general cover portions 20 by the mountain fold portions Lm and the valley fold portions Lv provided on the back surface RS side of the main cover piece SP1, and by providing (inserting) at least a part of the general cover portions 20 to the back side of the design cover portions 10, the geometric planar shape of the design cover portions 10 can show better design property. In the present embodiment, since the design cover portion 10 is raised up and brought into a floating state, it is possible to impart a more appropriate stereoscopic effect to the design cover portion 10. In the present embodiment, at least a pair of (two) design cover portions 10 are arranged with directions thereof being different so as to show different appearances, and thus the design property of the main cover piece SP1 can be further improved. Further, in the present embodiment, the width dimensions of the mountain fold portion Lm and the valley fold portion Lv are different from each other and are distinguished more clearly, and thus each cover part can be provided more appropriately. According to the present embodiment, it is possible to provide a seat cover 6S to which a geometric pattern more excellent in design property is imparted.

### [Alternative Example 1]

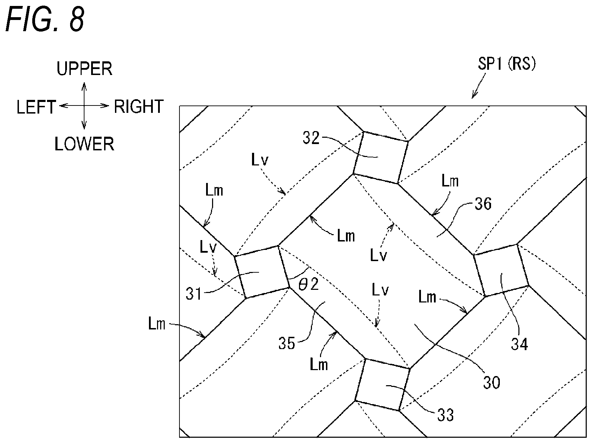

Here, the design cover portions can adopt various positional relationships in addition to the above positional relationship. For example, the main cover piece SP1 of Alternative Example 1 shown in FIG. 7 has substantially the same basic configuration as that of Embodiment 1, but is different from the above embodiment in that the design cover portions 10 are spaced apart from each other with relatively large interval. In the present alternative example, as shown in FIG. 8, a first tiling pattern is slightly changed from that of Embodiment 1. That is, a basic pattern substantially the same as that of Embodiment 1 is provided on the back surface RS of the main cover piece SP1, but the first corner section 31 and the third corner section 33 (the second corner section 32 and the fourth corner section 34) are slightly tilted in a direction approaching each other as compared with Embodiment 1. Therefore, an angle θ2 (θ2 is smaller than θ1 in FIG. 3) between adjacent mountain fold portion Lm and valley fold portion Lv in each of the corner sections 31 to 34 is narrowed, and an amount of rotation of each of the corner sections 31 to 34 during the torsion folding is reduced. Thus, in the present alternative example, the amount of rotation of each of the corner sections 31 to 34 is reduced and the amount of contracting in the plane direction is reduced (for example, an area of the insertion portion 20a is reduced), and thus the design cover portions 10 can be arranged relatively sparsely.

### [Alternative Example 2]

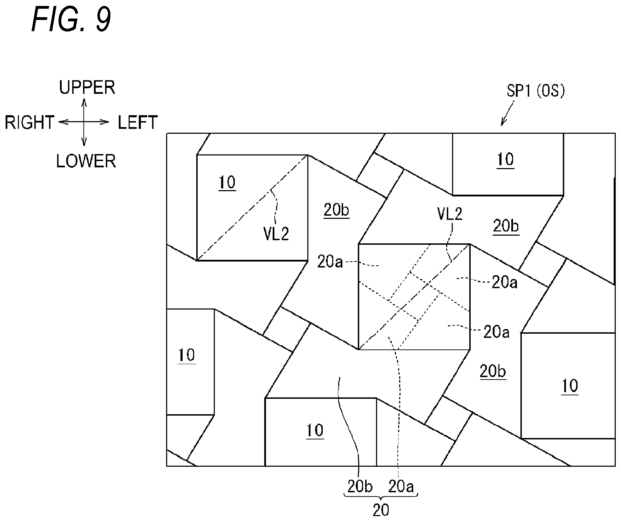

In the main cover piece SP1 of Alternative Example 2, with reference to FIG. 9, a same square shape, when viewed from the front, is used as the planar shape of the plurality of design cover portions 10. The present alternative example is different from Embodiment 1 in that the plurality of design cover portions 10 are arranged at equal intervals in a state where directions of the planar shapes are the same. That is, in the present alternative example, a virtual straight line VL2 as a diagonal line passing through a center of the same square planar shape is defined and a direction of the virtual straight line VL2 is defined as a direction of the planar shape. Further, a virtual straight line VL2 of a specific design cover portion 10 arranged substantially in the center in FIG. 9 is gradually inclined upward toward the left side. Similarly, virtual straight lines VL2 of other design cover portions 10 which are vertically and laterally adjacent to the specific design cover portion 10 are also gradually inclined upward toward the left side (in FIG. 9, the virtual straight line VL2 is shown on one of other design cover portions 10 for convenience). Thus, since the directions of the design cover portions 10 are the same, the design cover portions 10 show an aligned external appearance and are more excellent in design property. It is desirable that a positional relationship between the virtual straight lines VL2 are completely parallel with each other, but a slight error in direction is allowed if the virtual straight lines VL2 can be regarded as almost parallel in external appearance. A part of the main cover piece SP1 excluding the design cover portions 10 is the general cover portions 20. The general cover portion 20 has substantially the same basic configuration as that of Embodiment 1 and includes the insertion portion 20a and the filling portion 20b.

### [Second Tiling Pattern]

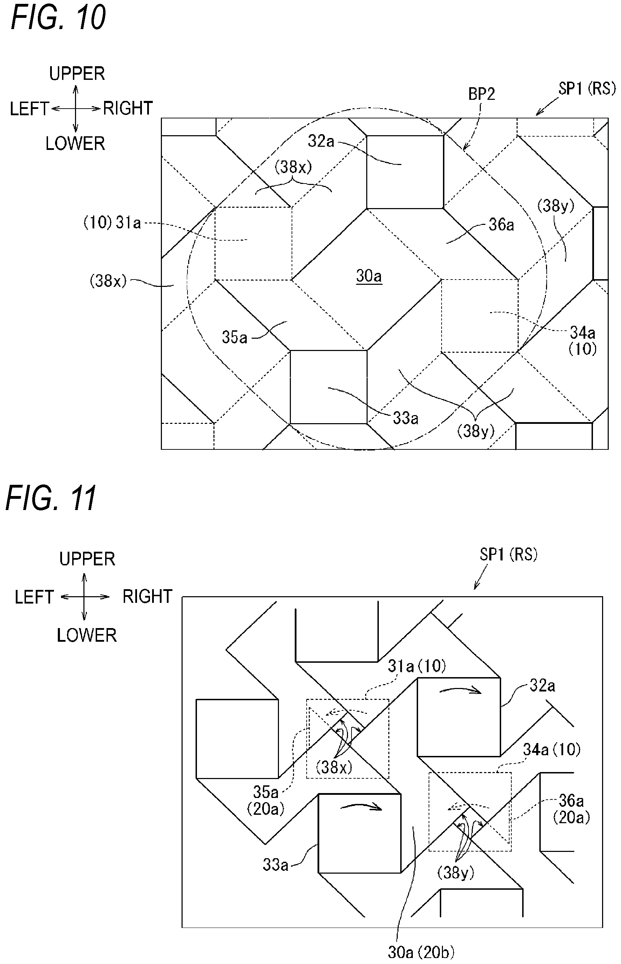

Each of the above design cover portions 10 is formed by forming a second tiling pattern shown in FIG. 10 on the back surface RS of the main cover piece SP1, spacing apart sections forming the design cover portions 10 with relatively large intervals, and arranging the sections in the same direction. A plurality of second basic patterns BP2 are filled and arranged on the back surface RS of the main cover piece SP1 of the present alternative example. Each of the second basic pattern BP2 includes a rhombic central section 30a, four square corner sections (first corner section 31a to fourth corner section 34a) and a pair of parallelogram-shaped lateral sections 35a, 36a, and a positional relationship of the sections is substantially the same as that of Embodiment 1.

The second basic pattern BP2 of the present alternative example is different from the basic pattern of Embodiment 1 in that, as shown in FIG. 10, the shape of each section is different, and the first corner section 31a and the second corner section 32a (the third corner section 33a and the fourth corner section 34a) are connected in a mountain-valley reversed state. That is, the second corner section 32a and the third corner section 33a have the same configuration as the second corner section 32 of Embodiment 1. The first corner section 31a is formed in a state where the mountain fold portion and the valley fold portion are reversed with respect to the second corner section 32a, and the fourth corner section 34a is formed in a state where the mountain fold portion and the valley fold portion are reversed with respect to the third corner section 33a. The first corner section 31a and the fourth corner section 34a are sections forming the design cover portions 10 of the present alternative example. The first corner section 31a and the fourth corner section 34a have the same shape and the same size, and are oriented in the same direction. Thus, in the present alternative example, since each corner section are connected in the mountain-valley reversed state, the first corner section 31a and the fourth corner section 34a which form the design cover portions can be arranged at diagonal positions of the central section 30a and spaced apart with relatively large interval.

During folding, with reference to FIG. 10 and FIG. 11, the main cover piece SP1 can be torsionally folded with the second corner section 32a and the third corner section 33a of the second basic pattern BP2 as rotation centers. That is, as shown in FIG. 11, the second corner section 32a and the third corner section 33a are rotated in the clockwise direction, and surrounding parts thereof in the main cover piece SP1 are folded in the order of valley fold and mountain fold so as to be folded over. In the present alternative example, the second corner section 32a (the third corner section 33a) and the first corner section 31a (the fourth corner section 34a) are in the mountain-valley reversed state. Therefore, the first corner section 31a and the fourth corner section 34a are rotated in the counterclockwise direction to the outer surface side as shown in FIG. 11, and the surrounding parts in the main cover piece SP1 (parts corresponding to the lateral sections) are folded and gathered on the back surface side of the corner sections 31a, 34a. Thus, in the present alternative example, the first corner section 31a and the fourth corner section 34a are folded out to the outer surface side of the main cover piece SP1 to form the design cover portions 10 shown in FIG. 9. Further, the insertion portions 20a formed by a part of the lateral sections 35a, 36a are inserted to the back side of the design cover portions 10. In the present alternative example, the lateral section 35a (36a) of the second basic pattern BP2 and three lateral sections 38x (38y) of an adjacent second basic pattern are folded and superposed in a cross shape and inserted to the back side of the design cover portion 10, and thus the insertion portion 20a is formed by a part of each of these four lateral sections respectively. Further, the filling portion 20b is formed by the remaining sections (30a or the like). Thus, in the present alternative example, the design cover portions 10 of the same shape and same size are arranged adjacently with the general cover portion 20 interposed therebetween. Further, the design cover portions 10 are arranged to be aligned with directions thereof being the same, so that the design property of the seat cover 6S can be further improved.

### [Alternative Example 3]

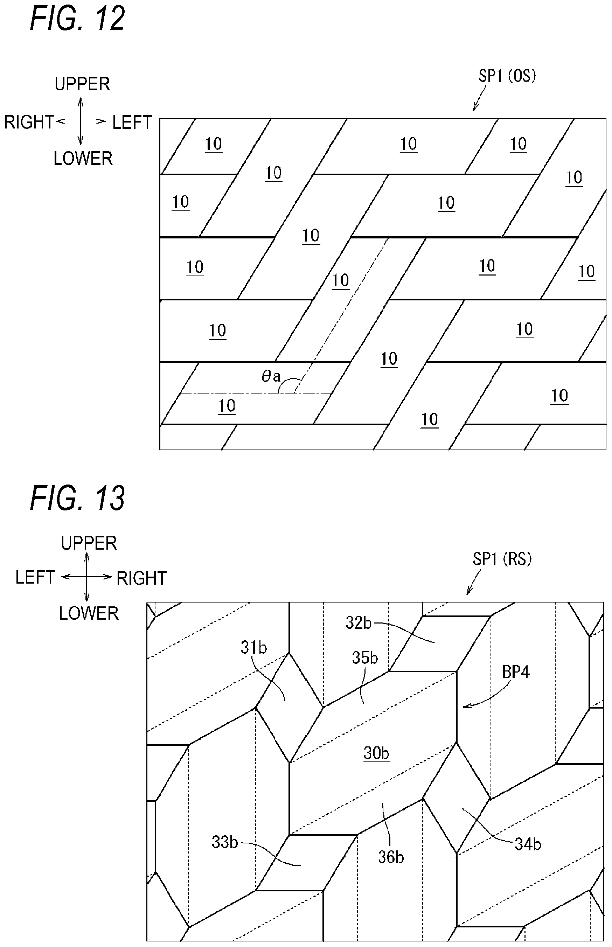

The outer surface OS of the main cover piece SP1 of Alternative Example 3 has the similar external appearance as that of Embodiment 1 as shown in FIG. 12, but is different from Embodiment 1 in that adjacent design cover portions 10 are arranged to intersect each other at an obtuse angle (intersection angle θa>90°). In the present alternative example, as shown in FIG. 13, the tiling pattern on the back surface RS of the main cover piece SP1 is also slightly changed from that of Embodiment 1. That is, each of the design cover portions 10 of the present alternative example can be formed by intersecting central sections 30b forming the design cover portions 10 with each other at an obtuse angle. In order to maintain the relationship between adjacent central sections 30b, a shape of each of the lateral sections 35b, 36b are short on an upper base thereof. Further, the first corner section 31b and the fourth corner section 34b are substantially in a rhombic shape which is long in an upper-lower direction, and the second corner section 32b and the third corner section 33b are substantially in a rhombic shape which is long in a left-right direction. Further, the design cover portions 10 shown in FIG. 12 can be formed by torsionally folding the main cover piece SP1 of the alternative example in the similar order with Embodiment 1.

### [Embodiment 2]

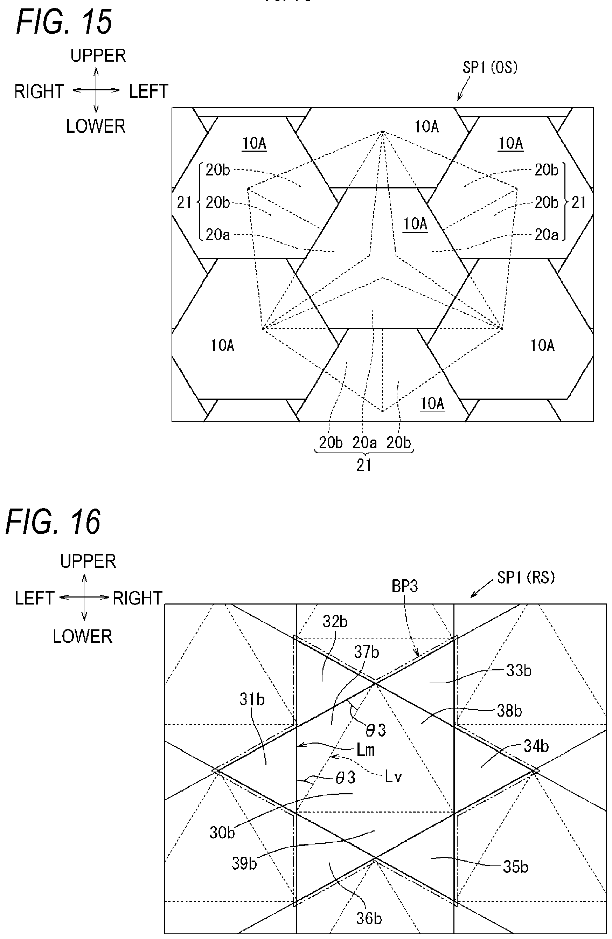

In a vehicle seat 2A of Embodiment 2, components having substantially the same basic configuration as the vehicle seat of Embodiment 1 are denoted by the same reference numerals and detailed description thereof is omitted. Further, the vehicle seat 2A of Embodiment 2 shown in FIG. 14 has the same basic configuration (4, 6, 8) as that of Embodiment 1, but the seat cover 6S of the seat back 6 is provided with design cover portions 10A having a geometric planar shape different from those of Embodiment 1. That is, in the present embodiment (Alternative Examples 4, 5 to be described below), with reference to FIG. 14 and FIG. 15, a plurality of design cover portions 10A based on a triangular shape are provided on the main cover piece SP1 forming the seat cover 6S.

### [Design Cover Portion]

A plurality of design cover portions 10A and general cover portions 21 (to be described in detail below) can also be provided on the outer surface OS of the main cover piece SP1 by applying torsional folding process to be described below to the main cover piece SP1 of the present embodiment. Here, in the present embodiment, a same equilateral triangle (an example of a geometrical pattern) when viewed from the front is used as a planar shape of each design cover portion 10A, and the design cover portions 10A are arranged with directions thereof being the same. Each design cover portion 10A is arranged with one vertex thereof on an upper side and a base thereof on a lower side, and further three vertexes of each design cover portion 10A are overlapped and hidden on a side of another adjacent design cover portion 10A. Therefore, when the main cover piece SP1 is viewed from the front, each design cover portion 10A shows a substantially hexagonal external appearance.

### [General Cover Portion]

General cover portions 21 are a part of the main cover piece SP1 excluding the design cover portions 10A, and each includes an insertion portion 20a and a filling portion 20b. The insertion portion 20a is an isosceles triangle portion provided around each side of the design cover portion 10A, and is internally folded and inserted to the back side at each side of an adjacent design cover portion 10A. The filling portion 20b is an equilateral triangular part which is folded back in an opposite direction from a peripheral edge of the insertion portion 20a and is arranged to fill a space between each design cover portion 10A. In the general cover portion 21 of the present embodiment, the insertion portion 20a is also arranged on the filling portion 20b, and further, the insertion portion 20a is also inserted to the back side of a corresponding design cover portion 10A. Therefore, each of the design cover portions 10A is raised up from the filling portion 20b by the insertion portion 20a of the general cover portion 21, and is arranged at a position on a side of the outer surface OS which is one step higher than the filling portion 20b.

### [Third Tiling Pattern]

Further, a plurality of types of triangular sections formed by the mountain fold portions Lm and the valley fold portions Lv are arranged on the back surface RS of the main cover piece SP1 shown in FIG. 16 in a third tiling pattern. In the present embodiment, a third basic pattern BP3 (see a part surrounded by a two-dotted broken line in FIG. 16) including a plurality of sections 30b to 39b is provided, and further the third basic pattern BP3 is filled and arranged on the back surface RS of the main cover piece SP1 according to a predetermined rule to be described below. Further, since each of the third basic patterns BP3 has the same configuration, details of one third basic pattern BP3 will be described below as an example. The third basic pattern BP3 is composed of three types of triangular sections, and includes an equilateral triangular central section 30b, six equilateral triangular peripheral sections 31b to 36b and three isosceles triangular lateral sections 37b to 39b. Further, sides of each of the sections 31b to 39b are formed by one of the mountain fold portion Lm and the valley fold portion Lv.

Here, the central section 30b is an equilateral triangular section which forms the design cover portion 10A, and all three sides thereof are formed by valley fold portions Lv. Each of the three lateral sections 37b to 39b is a equilateral triangular section which forms the insertion portion 20a of the general cover portion 21, and is provided adjacent to the outside of each side of the central section 30b. The valley fold portion Lv forming the side of the central section 30b forms a base of each of the lateral sections 37b to 39b, and each inclined side of each lateral section 37b to 39b is formed by the mountain fold portion Lm. Further, in the present embodiment, inclined sides of each of the lateral sections 37b to 39b are arranged to form a hexagonal outer shape. The center of the hexagonal outer shape is the same as the center of the central section 30b and vertexes of the hexagonal shape alternatively contacts the vertexes of the central section 30b. Further, each of the six peripheral sections (a first peripheral section 31b, a second peripheral section 32b, third peripheral section 33b, fourth peripheral section 34b, fifth peripheral section 35b, and sixth peripheral section 36b) is an equilateral triangular section which forms the filling portion 20b of the general cover portion 21. Each side of each peripheral section 31b to 36b is formed by the mountain fold portion Lm, and the peripheral sections 31b to 36b are arranged adjacently at equal intervals outside the hexagonal outer shape and are arranged clockwise in numerical order. That is, a base of each of the peripheral sections 31b to 36b is formed by the mountain fold portion Lm forming each side (the inclined sides of each lateral section) of the hexagonal outer shape, and a vertex faces outward.

Further, a plurality of the third basic patterns BP3 are combined and filled on the back surface RS of the main cover piece SP1 of FIG. 16. That is, six other third basic patterns BP3 are arranged around one third basic pattern BP3 (the third basic pattern substantially at the center in FIG. 16). Adjacent third basic patterns BP3 are connected by sharing a pair of peripheral sections arranged therebetween. Further, the central section 30b of each third basic pattern BP3 is arranged in the same direction. Thus, the central sections 30b are provided on the back surface RS of the main cover piece SP1 in the same direction, and thus each design cover portion 10A having the positional relationship shown in FIG. 15 can be formed.

### [Folding of Main Cover Piece (Forming of Design Cover Portion and General Cover Portion)]

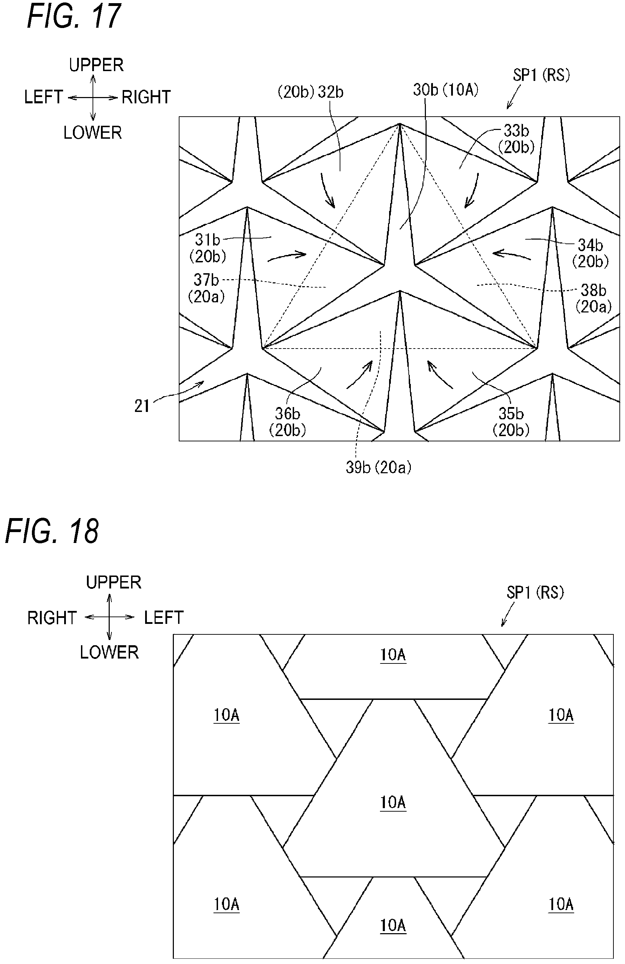

With reference to FIG. 16 and FIG. 17, the back surface RS of the main cover piece SP1 is mountain-folded along the mountain fold portions Lm and is valley-folded along the valley fold portions Lv. At this time, each main cover piece SP1 can be torsionally folded with reference to each of the peripheral sections 31b to 36b in the third basic pattern BP3. Further, in the present embodiment, a pair of peripheral sections facing a side of the central section 30b so as to face each side is considered as a pair. That is, in the third basic pattern BP3, the first peripheral section 31b and the second peripheral section 32b are paired, the third peripheral section 33b and the fourth peripheral section 34b are paired, and the fifth peripheral section 35b and the sixth peripheral section 36b are paired. Further, the first peripheral section 31b is rotated in the clockwise direction by twice of θ3, the second peripheral section 32b is rotated in the counterclockwise direction by the same amount at the same time, and surrounding parts thereof in the main cover piece SP1 are folded in the order of valley fold and mountain fold so as to be folded over. Similarly, the third peripheral section 33b is rotated in the clockwise direction, the fourth peripheral section 34b is rotated in the counterclockwise direction, the fifth peripheral section 35b is rotated in the clockwise direction and the sixth peripheral section 36b is rotated in the counterclockwise direction. Thus, in the torsion folding of the present embodiment, the surrounding parts in the main cover piece SP1 can also be folded over with each of the peripheral sections 31b to 36b as rotation centers and can also be contracted in a plane direction.

Thus, since the main cover piece SP1 is contracted in the plane direction while being partially rotated as shown in FIG. 16, with reference to FIGS. 15 to 17, each central section 30b is folded out to the outer surface OS, and a corresponding design cover portion 10A is formed by each central section 30b. The insertion portions 20a formed by corresponding lateral sections 37b to 39b are inserted toward each side of the design cover portion 10A, and the filling portions 20b are further formed by the peripheral sections 31b to 36b. Thus, in the present embodiment, a plurality of design cover portions 10A and general cover portions 21 can also be formed on the outer surface OS of the main cover piece SP1, and the positional relationship can be maintained by a maintaining portion (not shown).

Further, on the outer surface OS of the main cover piece SP1 shown in FIG. 15, the triangular design cover portions 10A are relatively densely arranged and each shows substantially an external appearance of a hexagonal shape. At this time, since directions of the design cover portions 10A are the same, the design cover portions 10A shown an external appearance of being aligned and densely arranged, which is more excellent in design property. Further, since being raised up by the insertion portion 20a, each design cover portion 10A floats toward the outer surface OS side and upward than the filling portion 20b. According to the present embodiment, it is also possible to provide a seat cover 6S to which a geometric pattern more excellent in design property is imparted.

### [Alternative Example 4]

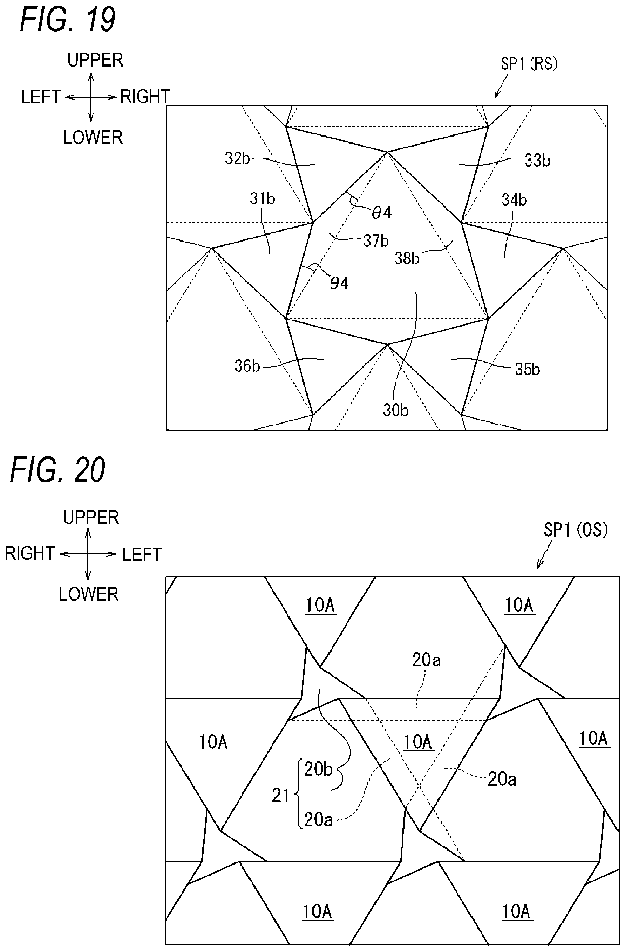

Here, the design cover portions 10A can adopt various positional relationships in addition to the above positional relationship. For example, the main cover piece SP1 of Alternative Example 4 shown in FIG. 18 has substantially the same basic configuration as that of Embodiment 2, but is different from the above embodiment in that the design cover portions 10A are spaced apart from each other with relatively large interval. In the present alternative example, as shown in FIG. 19, the third tiling pattern is slightly changed from that of Embodiment 2. That is, a basic pattern substantially the same as that of Embodiment 2 is provided on the back surface RS of the main cover piece SP1, but the first peripheral section 31b and the second corner section 32b are slightly tilted in a direction approaching each other as compared with Embodiment 1. The pairs of other peripheral sections (the pair of 33b and 34b, the pair of 35b and 36b) are also slightly tilted in a direction approaching each other. Therefore, an angle θ4 (θ4 is smaller than θ3 in FIG. 16) between adjacent mountain fold portion Lm and valley fold portion Lv in each of the peripheral sections 31b to 36b is narrowed, and an amount of rotation of each of the peripheral sections 31b to 36b during the torsion folding is reduced. Thus, in the present alternative example, the amount of rotation of each of the peripheral sections 31b to 36b is reduced and the amount of contracting in the plane direction is reduced (for example, an area of the insertion portion 20a is reduced), and thus the design cover portions 10A can be arranged relatively sparsely.

### [Alternative Example 5]

With reference to FIG. 20, the main cover piece SP1 of Alternative Example 5 is different from that of Embodiment 2 in that the plurality of design cover portions 10A are arranged at equal intervals in a state where directions of the equilateral triangular planar shapes are the same. Thus, since the directions of the design cover portions 10A are the same and arranged to be spaced apart, the design cover portions 10 each having an triangular shape show an aligned external appearance and are more excellent in design property. A part of the main cover piece SP1 excluding the design cover portions 10A is the general cover portions 21, and gaps between the design cover portions 10A are filled with the general cover portions 21 (In FIG. 20, only a part of the general cover portions are denoted by reference numerals for convenience). Further, the general cover portion 21 has substantially the same basic configuration as that of Embodiment 2 and includes the insertion portion 20a and the filling portion 20b.

### [Fourth Tiling Pattern]

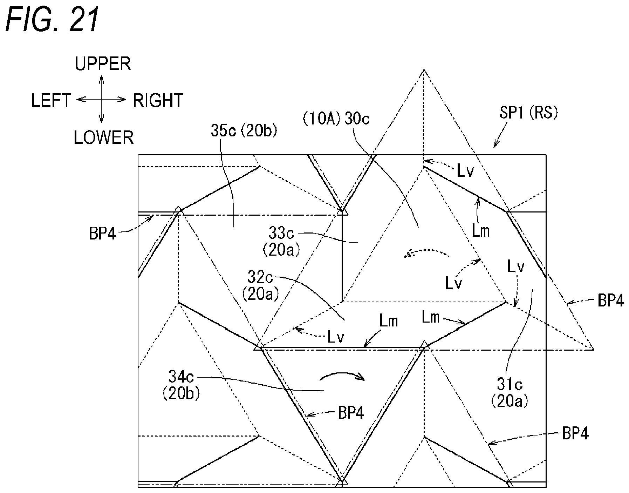

Each of the above design cover portions 10A is formed by forming a fourth tiling pattern shown in FIG. 21 on the back surface RS of the main cover piece SP1, spacing apart sections forming the design cover portions 10A with relatively large intervals, and arranging the sections in the same direction. A plurality of fourth basic patterns BP4 and two types of peripheral sections 34c and 35c are filled and arranged on the back surface RS of the main cover piece SP1 of the present alternative example. Each of the fourth basic patterns BP4 has a substantially equilateral triangular outer shape with a base thereof facing downward, and the fourth basic patterns BP4 are arranged in upper and lower rows on the back surface RS of the main cover piece. A row of the fourth basic patterns BP4 is arranged adjacent to the left and right of another row of the fourth basic patterns BP4 in a state of being shifted up and down by half. Further, adjacent fourth basic patterns BP4 are connected with each other by the inversed equilateral triangular peripheral section 34c and the regular hexagonal peripheral section 35c.

Further, the fourth basic pattern BP4 includes an equilateral triangular central section 30c arranged at the center and three parallelogram-shaped lateral sections 31c to 33c. The central section 30c is an equilateral triangular section formed by the valley fold portions Lv forming the design cover portion 10A, and has the same center as the center of the fourth basic pattern BP4, and the length of the side thereof is halved relative to that of the fourth basic pattern BP4. The mountain fold portions Lm and the valley fold portions Lv extend radially from each vertex of the central section 30c. That is, linear valley fold portions Lv extend respectively from each vertex of the central section 30c to vertexes of the outer shape, and these valley fold portions Lv are arranged in a cross shape around a center of the central section 30c. Further, a linear mountain fold portion Lm extends from each vertex of the central section 30c to a side of the outer shape, and each mountain fold portion Lm is arranged to be inclined by about 120° clockwise with respect to the valley fold portion Lv extending from the same vertex. Lateral sections 31c to 33c are provided adjacent to each side of the central section 30c. Short sides (inclined sides) of each of the lateral sections 31c to 33c are formed by a mountain fold portion Lm and a valley fold portion Lv that extend in parallel at each side of the central section 30c. Long sides of each of the lateral sections 31c to 33c are formed by valley fold portions Lv at each side of the central section 30c, and mountain fold portions Lm that overlaps the outer shape of the fourth basic pattern BP4.

Further, adjacent fourth basic patterns BP4 are connected with each other by the inversed equilateral triangular peripheral section 34c and the regular hexagonal peripheral section 35c, and each of the peripheral sections 34c, 35c is a section forming the filling portion 20b of the general cover portion 21. For example, when explaining the positional relationship of the peripheral sections as an example of the fourth basic pattern BP4 on the upper right side of the figure, the inverted equilateral triangular peripheral section 34c is provided on the left side of the bottom of the fourth basic pattern BP4. The inverted equilateral triangular peripheral section 34c is a section formed by the mountain fold portions Lm, and a base thereof is formed by a mountain fold portion Lm forming a long side of the lower lateral section 32c. The inverted triangular peripheral section 34c is a part that is rotated during the torsion folding, and is in a mountain-valley reversed relationship with respect to the central section 30c. Further, the regular hexagonal peripheral section 35c is provided on the lower side of a left inclined side of the fourth basic pattern BP4, and sides of the peripheral section 35c is formed alternately by the mountain fold portion Lm and the valley fold portion Lv (inclined sides of each lateral section).

During folding, with reference to FIG. 21, the main cover piece SP1 can be torsionally folded with the inverted equilateral triangular peripheral section 34c as a rotation center. That is, the inverted equilateral triangular peripheral section 34c is rotated in the clockwise direction, and surrounding parts thereof in the main cover piece SP1 are folded in the order of valley fold and mountain fold so as to be folded over. In the present alternative example, the inverted triangular peripheral section 34c and the central section 30c are in a mountain-valley reversed relationship (in the similar relationship as Alternative Example 2 of Embodiment 1). Therefore, the central section 30c is rotated in the counterclockwise direction on the outer surface side, and surrounding parts in the main cover piece SP1 (parts corresponding to the lateral sections 31c to 33c) are folded and gathered on the back surface side of the central section 30c (see FIG. 11 showing Alternative Example 2 of Embodiment 1). Thus, in the present alternative example, the central section 30c is folded out to the outer surface side of the main cover piece SP1 to form the design cover portion 10A shown in FIG. 20. Further, the insertion portion 20a formed by a part of the lateral sections 31c to 33c is inserted to the back side of the design cover portion 10A. A reference filling portion 20b is formed by each of the peripheral sections 34c, 35c. Thus, in the present alternative example, the design cover portions 10A of the same shape and same size are arranged adjacently with the general cover portion 21 interposed therebetween. Further, the design cover portions 10A are arranged to be spaced with directions thereof being the same, so that the design property of the seat cover 6S can be further improved.

### [Modified Example 1]

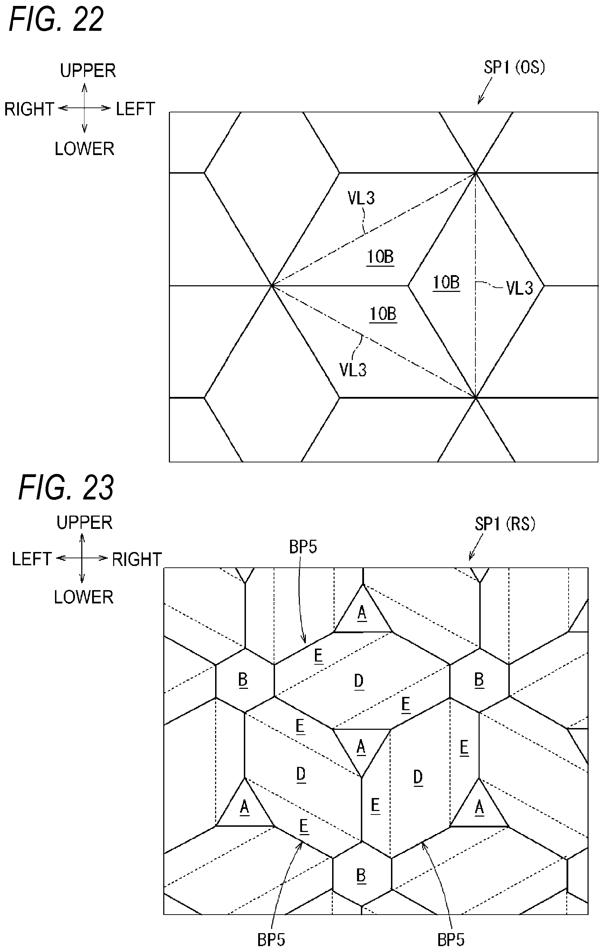

Here, each design cover portion may adopt various configurations in addition to the above configuration. For example, a plurality of rhombic design cover portions 10B are provided on the main cover piece SP1 of Modified Example 1 shown in FIG. 22, and three design cover portions 10B are gathered to form a hexagonal shape. That is, in the same rhombic planar shape of the present modified example, a virtual straight line VL3 as a diagonal line (diagonal line connecting acute angles) passing through a center of the same rhombic shape is defined and a direction of the virtual straight line VL3 is defined as a direction of the planar shape. The three design cover portions 10B are arranged such that the three virtual straight lines VL3 form an equilateral triangle. The three rhombic design cover portions 10B are combined with such a positional relationship, and thus it is possible to arrange the design cover portions 10B to show a hexagonal external appearance as a whole.

### [Fifth Tiling Pattern]

Each of the above design cover portions 10B is formed by forming a fifth tiling pattern shown in FIG. 23 on the back surface RS of the main cover piece SP1, and arranging sections (central sections D) forming the design cover portions 10B in predetermined directions. Three fifth basic patterns BP5 having substantially the same section arrangement as that of Embodiment 1 are provided on the back surface RS of the main cover piece SP1, and are arranged on the upper side, the lower right side and the lower left side. For example, the fifth basic pattern BP5 arranged on the upper side includes a parallelogram-shaped central section D, two trapezoidal lateral sections E (E), and four corner sections A (A), B (B). The corner sections B (B) corresponding to the first corner section and the fourth corner section is a regular hexagon, and the corner section A (A) corresponding to the second corner section (the third corner section) is an equilateral triangle (inverted equilateral triangle). Further, the fifth basic patterns BP5 on the upper side, the lower right side and the lower left side are connected by a common corner section arranged therein. That is, in the present modified example, the fifth basic patterns BP5 are connected around the inverted triangular corner section A, and further, the central sections D of the fifth basic patterns BP5 are arranged so as to form substantially a triangular shape around the inverted triangular corner section A. Further, the main cover piece SP1 of the present modified example is torsionally folded in the similar order as Embodiment 1 while each corner section A (A), B (B) is rotated, and thus the design cover portions 10B shown in FIG. 22 can be formed.

### [Alternative Example 6]

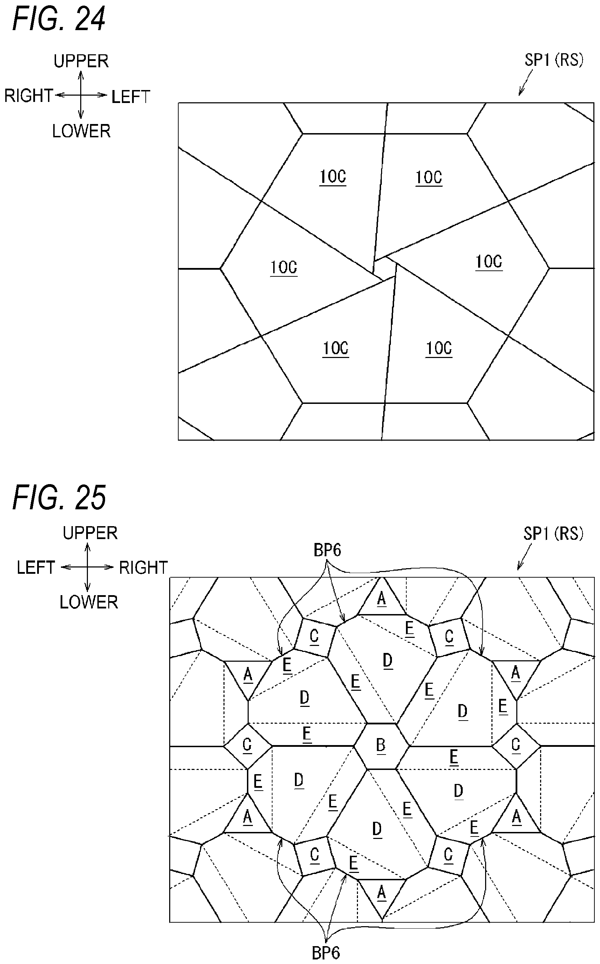

A specific geometric pattern (hexagon) is formed by three design cover portions in Modified Example 1, but four or more design cover portions can also be gathered to form a specific geometric pattern. For example, a plurality of rhombic design cover portions 10C are provided on the main cover piece SP1 of Alternative Example 6 shown in FIG. 24, and six design cover portions 10C are gathered to form a hexagonal shape. Further, a sixth tiling pattern shown in FIG. 25 is used to set sections (central sections D) forming the design cover portions 10C to have a predetermined positional relationship, and thus each of the design cover portions 10C can be formed. In the sixth tiling pattern, six sixth basic patterns BP6 are used, and each sixth basic pattern BP6 has substantially the same section arrangement as the fifth basic pattern shown in FIG. 23. Further, each sixth basic pattern BP6 includes a triangular corner section A, a regular hexagonal corner section B, a pair of rhombic corner sections C, C, a central section D and each lateral section E (E). The six sixth basic patterns BP6 are connected by a regular hexagonal corner section B which is in common. That is, in the present alternative example, the sixth basic patterns BP6 are connected around the regular hexagonal corner section B, and further, the central section D of each sixth basic pattern BP6 is arranged at each vertex of the regular hexagonal corner section B. Further, the main cover piece SP1 of the present modified example is torsionally folded in the similar order with Embodiment 1 while each corner section A (A), B (B) is rotated, and thus the design cover portions 10C shown in FIG. 24 can be formed.

### [Modified Example 2]

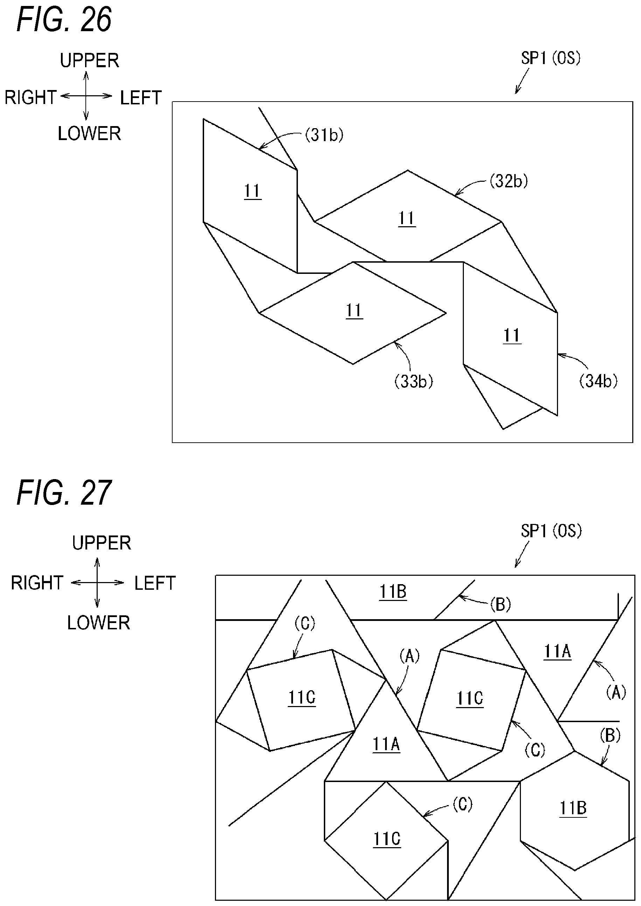

Here, the design cover portion and the general cover portion can be formed even if the mountain fold portion and the valley fold portion are reversed (mountain-valley reversed) in each of the above tiling patterns. In this case, the back surface of the main cover piece shown in each of the embodiments and each of the alternative examples is the outer surface and the section which is a reference in the torsion folding forms the design cover portion. For example, a plurality of rhombic design cover portions 11 are formed on the main cover piece SP1 of Modified Example 2 shown in FIG. 26 by reversing the mountain fold portions and valley fold portions of the tiling pattern shown in FIG. 13 (Alternative Example 3 of Embodiment 1). A pair of design cover portions 11 arranged in an upper-lower relationship at the center of the figure has a horizontally elongated external appearance with acute angle portions thereof facing leftward and rightward. A pair of design cover portions 11 arranged on the left and right sides of the drawing have a vertically elongated external appearance with acute angle portions thereof facing upward and downward.

Further, each of the above design cover portions 11 is formed by reversing the mountain fold portions and the valley fold portions in the tiling pattern shown in FIG. 13 (Alternative Example 3 of Embodiment 1). Thus, in the tiling pattern in a mountain-valley reversed state, each of the corner sections 31b to 34b is rotated in the clockwise (or counterclockwise) direction on the outer surface side, and surrounding parts in the main cover piece SP1 are folded and gathered on the back surface side of the corner sections 31a to 34a. Thus, in the present modified example, the first corner section 31b and the fourth corner section 34b are folded out to the outer surface side of the main cover piece SP1 to form, for example, each vertically elongated design cover portion 11 shown in FIG. 26. Similarly, the second corner section 32b and the third corner section 33b are folded out to the outer surface side of the main cover piece SP1 to form, for example, each horizontally elongated design cover portion 11 shown in FIG. 26.

Thus, in the present modified example, the positional relationship or the like of each design cover portion can be changed by reversing the mountain fold portions and the valley fold portions (mountain-valley reversed) in one of the tiling patterns. That is, as shown in FIG. 12, the design cover portions 10 can be densely arranged according to the normal tiling pattern shown in FIG. 13. The design cover portions 11 can be arranged to be apart from each other as shown in FIG. 26 by mountain-valley reversing the tiling pattern shown in FIG. 13. Further, in each of the embodiments and each of the alternative examples, the positional relationship or the like of the design cover portions can also be changed by mountain-valley reversing the corresponding tiling pattern (see FIG. 6, FIG. 11, and FIG. 17).

### [Modified Example 3]

Further, a design cover portion having a planar shape completely different from a normal mountain-valley relationship can also be formed by reversing the mountain fold portions and the valley fold portions in one of the tiling patterns. For example, triangular design cover portions 11A, hexagonal design cover portions 11B, and quadrangular design cover portions 11C are provided on the main cover piece SP1 of Modified Example 3 shown in FIG. 27. Further, each of the above design cover portions 11A to 11C is formed by reversing the mountain fold portions and the valley fold portions in the sixth tiling patterns shown in FIG. 25 (Alternative Example 6 of Modified Example 1). Thus, in the tiling pattern in a mountain-valley reversed state, each of corner sections A to C is rotated in the clockwise (or counterclockwise) direction on the outer surface side, and surrounding parts in the main cover piece SP1 are folded and gathered on the back surface side of the corner sections A to C. Thus, in the present modified example, the triangular corner section A is folded out to the outer surface side of the main cover piece SP1 to form the triangular design cover portion 11A shown in FIG. 27. Similarly, the hexagonal corner section B is folded out to the outer surface side of the main cover piece SP1 to form the hexagonal design cover portion 11B shown in FIG. 27. Similarly, the quadrangular corner section C is folded out to the outer surface side of the main cover piece SP1 to form the quadrangular design cover portion 11C shown in FIG. 27.

Thus, in the present modified example, it is possible to make the planar shape of each design cover portion the same or different by using mountain-valley reversion in one of the tiling patterns. That is, according to the normal tiling pattern shown in FIG. 25, it is possible to provide design cover portions 10C having substantially the same planar shape as shown in FIG. 24. Further, it is possible to provide the design cover portions 11A to 11C having different planar shapes as shown in FIG. 27 by mountain-valley reversing the tiling patterns shown in FIG. 25. Therefore, whether the planar shape of each design cover portion is the same or different can be selected, and variation of the geometric pattern provided on the main cover piece SP1 can be increased.

The seat cover 6S (cover) of the embodiments is not limited to the above-described embodiments, and various other embodiments can be adopted. In the embodiments, although the configurations (a planar shape, a dimension, an arrangement position, the number to be arranged, or the like) of the design cover portion 10 and the general cover portion 20 or the like are exemplified, it is not intended to limit the configurations of the each cover portion. For example, various geometric patterns realizable by flat folding can be adopted as the planar shape of the design cover portion, and for example, various polygonal shapes other than triangle, quadrangle, hexagon etc. can be adopted. The geometric pattern may have a straight outer peripheral edge and may have a curved outer peripheral edge. When a plurality of design cover portions are combined to represent a specific geometric pattern as a whole, the specific geometric pattern can adopt various geometric patterns (for example, specific letters, floral patterns and stars) in addition to the polygonal shape. In the embodiments, although an example in which a plurality of design cover portions are formed on the outer surface of the cover has been described, a single design cover portion can be formed on the outer surface of the cover. Further, the configuration of the general cover portion can be appropriately changed according to the configuration of the design cover portion, and various flat folding methods can be adopted as a method for forming the cover portion in addition to the torsion folding. Furthermore, the tiling patterns can be combined.

In the embodiments, although the configurations of the mountain fold portion Lm and the valley fold portion Lv are exemplified, the configuration of each fold portion can be changed as appropriate. For example, the width dimension of the mountain fold portion and the valley fold portion may be different form section to section, the width dimension of the mountain fold portion may be relatively large, or the width dimension of both fold portions may be the same. The mountain fold portion and the valley fold portion can be formed by linear or broken line cuts in addition to the grooves, and can also be formed by a plurality of holes that are arranged adjacently.

In the embodiments, although the seat cover 6S of the vehicle seat 2 or the like is exemplified as the cover, the configuration of the embodiments can be applied to covers of various members. That is, examples of members having this type of cover can include vehicle interior parts, household interior parts, and clothing goods such as bags. Examples of the vehicle interior part can include various members in addition to the vehicle seat, such as a door portion, an instrument panel, a ceiling portion, or a console, and the configuration of the embodiments can be suitably applied to, in particular, a vehicle interior part mounted in a vehicle such as a car, an aircraft, a train, a ship, etc. In the vehicle seat, the configuration of the embodiments can be applied to various seat covers of configuration members such as seat cushions, headrests, armrests, in addition to the seat cushion and the seat back. Further, the configuration of the embodiments can be applied to at least one (all or a part) of a plurality of cover pieces when the cover is formed by a plurality of cover pieces, and for example, can be applied to at least one (all or a part) of a plurality of cover pieces including the main cover piece and the side cover pieces in the embodiments.

## Claims

1. A cover (6S) which is configured to constitute an external appearance of a member (6),
wherein an outer surface (OS) of the cover (6S) is provided with a design cover portion (10; 10A; 10B; 10C; 11; 11A, 11B, 11C) and a general cover portion (20; 21) in a state where a positional relationship between the design cover portion (10; 10A; 10B; 10C; 11; 11A, 11B, 11C) and the general cover portion (20; 21) is maintained, the design cover portion (10; 10A; 10B; 10C; 11; 11A, 11B, 11C) having a geometric planar shape, and the general cover portion (20; 21) including a part provided to a back side of the design cover portion (10; 10A; 10B; 10C; 11; 11A, 11B, 11C), **characterized in that**
a back surface (RS) of the cover (6S), which is opposite to the outer surface (OS) of the cover (6S), is provided with a linear mountain fold portion (Lm) and a linear valley fold portion (Lv) which surround the design cover portion (10; 10A; 10B; 10C; 11; 11A, 11B, 11C), and the general cover portion (20; 21) is configured by mountain-folding the cover (6S) along the mountain fold portion (Lm) and valley-folding the cover (6S) along the valley fold portion (Lv) in a case where the cover (6S) is viewed from the back surface side.

2. The cover (6S) according to claim 1,
wherein the part of the general cover portion (20; 21) is inserted to the back side of the design cover portion (10; 10A; 10B; 10C; 11; 11A, 11B, 11C).

3. The cover (6S) according to claim 1 or 2,
wherein the design cover portion (10; 10A; 10B; 10C; 11; 11A, 11B, 11C) is arranged on an outer surface side of the cover (6S) in a state of being raised up by the general cover portion (20; 21).

4. The cover (6S) according to any one of claims 1 to 3,
wherein the outer surface (OS) of the cover (6S) is provided with a plurality of the design cover portions (10; 10A) having a same polygonal planar shape, and
wherein in a case where one virtual straight line (VL2) which passes through a center of the same polygonal planar shape and extends within the same polygonal planar shape is defined and a direction of the virtual straight line (VL2) is defined as a direction of the planar shape for each of the plurality of design cover portions (10; 10A), the plurality of design cover portions (10; 10A) are arranged with the directions of the planar shapes thereof being the same.

5. The cover (6S) according to any one of claims 1 to 3,
wherein the outer surface (OS) of the cover (6S) is provided with a plurality of the design cover portions (10; 10B; 10C) having a same polygonal planar shape, and
wherein in a case where one virtual straight (VL1; VL3) line which passes through a center of the same polygonal planar shape and extends within the same polygonal planar shape is defined and a direction of the virtual straight line (VL1; VL3) is defined as a direction of the planar shape for each of the plurality of design cover portions (10; 10B; 10C), at least two of the design cover portions (10; 10B; 10C) among the plurality of design cover portions (10; 10B; 10C) are arranged with the directions of the planar shapes thereof being different from each other so as not to be in a parallel moving relationship with each other.

6. The cover (6S) according to any one of claims 1 to 3,
wherein the outer surface (OS) of the cover (6S) is provided with at least two of the design cover portions (10C; 11A, 11B, 11C),
wherein two design cover portions (10C) having a same polygonal shape with each other is formed by mountain-folding the cover along the mountain fold portion (Lm) and valley-folding the cover (6S) along the valley fold portion (Lv) in a case where the cover (6S) is viewed from the back surface side, and
wherein two design cover portions (11A, 11B, 11C) having a different polygonal shape with each other is formed by mountain-folding the cover (6S) along the valley fold portion (Lv) and valley-folding the cover (6S) along the mountain fold portion (Lm) in a case where the cover (6S) is viewed from the back surface side.

7. The cover (6S) according to any one of claims 1 to 6,
wherein the mountain fold portion (Lm) and the valley fold portion (Lv) are each configured by a linear groove provided on the back surface of the cover (6S), and in a case where a dimension of the groove in a direction perpendicular to an extending direction thereof is defined as a width dimension of the groove, a width dimension of the groove configuring the valley fold portion (Lv) is different from a width dimension of the groove configuring the mountain fold portion (Lm).

## Patentansprüche

1. Eine Abdeckung (6S), die dazu aufgebaut ist, das äußere Erscheinungsbild eines Elements (6) zu bilden,
wobei eine äußere Oberfläche (OS) der Abdeckung (6S) einen Designabdeckungsabschnitt (10; 10A; 10B; 10C; 11; 11A, 11B, 11C) und einen allgemeinen Abdeckungsabschnitt (20; 21) in einem Zustand aufweist, in dem eine Positionsbeziehung zwischen dem Designabdeckungsabschnitt (10; 10A; 10B; 10C; 11; 11A, 11B, 11C) und dem allgemeinen Abdeckungsabschnitt (20; 21) aufrechterhalten wird, wobei der Designabdeckungsabschnitt (10; 10A; 10B; 10C; 11; 11A, 11B, 11C) eine geometrische ebene Form aufweist und der allgemeine Abdeckungsabschnitt (20; 21) einen Teil umfasst, der an einer Rückseite des Designabdeckungsabschnitts (10; 10A; 10B; 10C; 11; 11A, 11B, 11C) vorgesehen ist, **dadurch gekennzeichnet, dass**
eine Rückseite (RS) der Abdeckung (6S), die der äußeren Oberfläche (OS) der Abdeckung (6S) gegenüberliegt, einen linearen Hochfalzabschnitt (Lm) und einen linearen Tieffalzabschnitt (Lv) aufweist, die den Designabdeckungsabschnitt (10; 10A; 10B; 10C; 11; 11A, 11B, 11C) umgeben, und der allgemeine Abdeckungsabschnitt (20; 21) durch Hochfalzen der Abdeckung (6S) entlang des Hochfalzabschnitts (Lm) und Tieffalzen der Abdeckung (6S) entlang des Tieffalzabschnitts (Lv) aufgebaut ist, wenn die Abdeckung (6S) von der Rückseite gesehen wird.

2. Abdeckung (6S) nach Anspruch 1,
wobei der Teil des allgemeinen Abdeckungsabschnitts (20; 21) an der Rückseite des Designabdeckungsabschnitts (10; 10A; 10B; 10C; 11; 11A, 11B, 11C) eingefügt ist.

3. Abdeckung (6S) nach Anspruch 1 oder 2,
wobei der Designabdeckungsabschnitt (10; 10A; 10B; 10C; 11; 11A, 11B, 11C) auf einer äußeren Oberflächenseite der Abdeckung (6S) in einem Zustand angeordnet ist, in dem er durch den allgemeinen Abdeckungsabschnitt (20; 21) angehoben ist.

4. Abdeckung (6S) nach einem der Ansprüche 1 bis 3,
wobei die äußere Oberfläche (OS) der Abdeckung (6S) mit einer Mehrzahl von Designabdeckungsabschnitten (10; 10A) versehen ist, die eine gleiche polygonale ebene Form aufweisen, und
wobei in einem Fall, in dem eine virtuelle gerade Linie (VL2) definiert ist, die durch einen Mittelpunkt der gleichen polygonalen ebenen Form verläuft und sich innerhalb der gleichen polygonalen ebenen Form erstreckt, und eine Richtung der virtuellen geraden Linie (VL2) als eine Richtung der ebenen Form für jeden der Mehrzahl von Designabdeckabschnitten (10; 10A) definiert ist, die Mehrzahl von Designabdeckabschnitten (10; 10A) so angeordnet sind, dass die Richtungen ihrer ebenen Formen gleich sind.

5. Abdeckung (6S) nach einem der Ansprüche 1 bis 3,
wobei die äußere Oberfläche (OS) der Abdeckung (6S) mit einer Mehrzahl von Designabdeckungsabschnitten (10; 10B; 10C) versehen ist, die eine gleiche polygonale planare Form aufweisen, und
wobei in einem Fall, in dem eine virtuelle gerade Linie (VL1; VL3) definiert ist, die durch einen Mittelpunkt der gleichen polygonalen ebenen Form verläuft und sich innerhalb der gleichen polygonalen ebenen Form erstreckt, und eine Richtung der virtuellen geraden Linie (VL1; VL3) als eine Richtung der ebenen Form für jeden der Mehrzahl von Designabdeckungsabschnitten (10; 10B; 10C) definiert ist, mindestens zwei der Designabdeckungsabschnitte (10; 10B; 10C) aus der Mehrzahl von Designabdeckungsabschnitten (10; 10B; 10C) so angeordnet sind, dass sich die Richtungen ihrer ebenen Formen voneinander unterscheiden, so dass sie nicht in einer sich parallel zueinander bewegenden Beziehung stehen.

6. Abdeckung (6S) nach einem der Ansprüche 1 bis 3,
wobei die äußere Oberfläche (OS) der Abdeckung (6S) mindestens zwei der Designabdeckungsabschnitte (10C; 11A, 11B, 11C) aufweist,
wobei zwei Designabdeckungsabschnitte (10C), die eine zueinander gleiche polygonale Form besitzen, durch Hochfalzen der Abdeckung entlang des Hochfalzabschnitts (Lm) und Tieffalzen der Abdeckung (6S) entlang des Tieffalzabschnitts (Lv) in einem Fall gebildet werden, in dem die Abdeckung (6S) von der Rückseite gesehen wird, und
wobei zwei Designabdeckungsabschnitte (11A, 11B, 11C), die eine zueinander unterschiedliche polygonale Form aufweisen, durch Hochfalzen der Abdeckung (6S) entlang des Tieffalzabschnitts (Lv) und Tieffalzen der Abdeckung (6S) entlang des Hochfalzabschnitts (Lm) in einem Fall gebildet werden, in dem die Abdeckung (6S) von der Rückseite gesehen wird.

7. Abdeckung (6S) nach einem der Ansprüche 1 bis 6,
wobei der Hochfalzabschnitt (Lm) und der Tieffalzabschnitt (Lv) jeweils durch eine lineare Nut aufgebaut sind, die auf der Rückseite der Abdeckung (6S) vorgesehen ist, und in einem Fall, in dem eine Abmessung der Nut in einer Richtung senkrecht zu ihrer Erstreckungsrichtung als eine Breitenabmessung der Nut definiert ist, eine Breitenabmessung der Nut, die den Tieffalzabschnitt (Lv) bildet, sich von einer Breitenabmessung der Nut unterscheidet, die den Hochfalzabschnitt (Lm) bildet.

## Revendications

1. Revêtement (6S) qui est configuré pour constituer une apparence extérieure d'un élément (6),
dans lequel une surface extérieure (OS) du revêtement (6S) est pourvue d'une partie de revêtement de conception (10 ; 10A ; 10B ; 10C ; 11 ; 11A, 11B, 11C) et d'une partie de revêtement générale (20 ; 21) dans un état où une relation de position entre la partie de revêtement de conception (10; 10A ; 10B ; 10C ; 11 ; 11A, 11B, 11C) et la partie de revêtement générale (20 ; 21) est maintenue, la partie de revêtement de conception (10 ; 10A ; 10B ; 10C ; 11 ; 11A, 11B, 11C) présentant une forme plane géométrique, et la partie de revêtement générale (20 ; 21) incluant une partie pourvue sur un côté arrière de la partie de revêtement de conception (10; 10A ; 10B ; 10C ; 11 ; 11A, 11B, 11C), **caractérisé en ce que**
une surface arrière (RS) du revêtement (6S), qui est opposée à la surface extérieure (OS) du revêtement (6S), est pourvue d'une partie de pli montagne linéaire (Lm) et d'une partie de pli vallée linéaire (Lv) qui entourent la partie de revêtement de conception (10 ; 10A ; 10B ; 10C ; 11 ; 11A, 11B, 11C), et la partie de revêtement générale (20 ; 21) est configurée en pliant en montagne le revêtement (6S) le long de la partie de pli montagne (Lm) et en pliant en vallée le revêtement (6S) le long de la partie de pli vallée (Lv) dans un cas où le revêtement (6S) est vu à partir du côté de la surface arrière.

2. Revêtement (6S) selon la revendication 1,
dans lequel la partie de la partie de revêtement générale (20 ; 21) est insérée sur le côté arrière de la partie de revêtement de conception (10 ; 10A ; 10B; 10C; 11 ; 11A, 11B, 11C).

3. Revêtement (6S) selon la revendication 1 ou 2,
dans lequel la partie de revêtement de conception (10 ; 10A ; 10B ; 10C; 11 ; 11A, 11B, 11C) est agencée sur un côté de surface extérieure du revêtement (6S) dans un état soulevée par la partie de revêtement générale (20 ; 21).

4. Revêtement (6S) selon l'une quelconque des revendications 1 à 3,
dans lequel la surface extérieure (OS) du revêtement (6S) est pourvue d'une pluralité de parties de revêtement de conception (10; 10A) présentant une même forme plane polygonale, et
dans lequel dans un cas où une ligne droite virtuelle (VL2) qui passe par un centre de la même forme plane polygonale et s'étend à l'intérieur de la même forme plane polygonale est définie et une direction de la ligne droite virtuelle (VL2) est définie comme une direction de la forme plane pour chacune de la pluralité de parties de revêtement de conception (10; 10A), la pluralité de parties de revêtement de conception (10 ; 10A) sont agencées avec les directions de leurs formes planes étant identiques.

5. Revêtement (6S) selon l'une quelconque des revendications 1 à 3,
dans lequel la surface extérieure (OS) du revêtement (6S) est pourvue d'une pluralité de parties de revêtement de conception (10; 10B ; 10C) présentant une même forme plane polygonale, et
dans lequel dans un cas où une ligne droite virtuelle (VL1 ; VL3) qui passe par un centre de la même forme plane polygonale et s'étend dans la même forme plane polygonale est définie et une direction de la ligne droite virtuelle (VL1 ; VL3) est définie en tant que direction de la forme plane pour chacune de la pluralité de parties de revêtement de conception (10 ; 10B ; 10C), au moins deux des parties de revêtement de conception (10 ; 10B ; 10C) parmi la pluralité de parties de revêtement de conception (10 ; 10B ; 10C) sont agencées avec les directions de leurs formes planes étant différentes les unes des autres de manière à ne pas être dans une relation de déplacement parallèle les unes par rapport aux autres.

6. Revêtement (6S) selon l'une quelconque des revendications 1 à 3,
dans lequel la surface extérieure (OS) du revêtement (6S) est pourvue d'au moins deux des parties de revêtement de conception (10C ; 11A, 11B, 11C),
dans lequel deux parties de revêtement de conception (10C) présentant une même forme polygonale l'une par rapport à l'autre sont formées en pliant en montagne le revêtement le long de la partie de pli montagne (Lm) et en pliant en vallée le revêtement (6S) le long de la partie de pli vallée (Lv) dans un cas où le revêtement (6S) est vu à partir du côté de surface arrière, et
dans lequel deux parties de revêtement de conception (11A, 11B, 11C) présentant une forme polygonale différente l'une de l'autre sont formées en pliant en montagne le revêtement (6S) le long de la partie de pli en vallée (Lv) et en pliant en vallée le revêtement (6S) le long de la partie de pli montagne (Lm) dans un cas où le revêtement (6S) est vu à partir du côté de surface arrière.

7. Revêtement (6S) selon l'une quelconque des revendications 1 à 6,
dans lequel la partie de pli montagne (Lm) et la partie de pli vallée (Lv) sont configurées chacune par une rainure linéaire pourvue sur la surface arrière du revêtement (6S), et dans un cas où une dimension de la rainure dans une direction perpendiculaire à une direction d'extension de celle-ci est définie comme une dimension de largeur de la rainure, une dimension de largeur de la rainure configurant la partie de pli vallée (Lv) est différente d'une dimension de largeur de la rainure configurant la partie de pli montagne (Lm).
